# EUROPEAN PATENT SPECIFICATION

(11) **EP 0 277 608 B1**
(45) Date of publication and mention of the grant of the patent: **18.05.1994**
(21) Application number: 88101334.6
(22) Date of filing: 29.01.1988
(51) Int. Cl.: C08F 255/02, C08F 4/34

(54) **Graft polymerization preformer and method of manufacturing the same**
Pfropfpolymerisationsprepolymer und Verfahren zu dessen Herstellung
Précurseur de polymérisation par greffage et sa préparation

(30) Priority: 31.01.1987 JP 21127/87; 11.05.1987 JP 114021/87; 10.08.1987 JP 199612/87; 10.08.1987 JP 199615/87; 10.08.1987 JP 199618/87
(43) Date of publication of application: 10.08.1988
(73) Proprietor: NIPPON OIL AND FATS COMPANY, LIMITED, Chiyoda-ku Tokyo (JP)
(72) Inventor: Moriya, Yasuo, Chita-Gun Aichi-Prefecture (JP); Goto, Hiroshi, Chita-Gun Aichi-Prefecture (JP); Suzuki, Nobuyoshi, Chita-Gun Aichi-Prefecture (JP)
(74) Representative: Grünecker, Kinkeldey, Stockmair & Schwanhäusser Anwaltssozietät

(56) References cited:
- EP-A- 0 206 644
- FR-A- 2 357 598
- US-A- 2 947 718
- KOBUNSHI RONBUNSHU, vol. 44, no. 2, 1987, pages 89-95, JP; N. SUZUKI et al.: "Preparations of block and graft copolymers and their applications, III"
- PATENT ABSTRACTS OF JAPAN, vol. 12, no. 122 (C-488)[2969], 15th April 1988, page 66 C 488; & JP-A-62 243 645 (NIPPON OIL & FATS CO. LTD) 24-10-1987

## Description

This invention relates to a graft polymerization precursor, which is useful, for example, as adhesive, coating agent, quality improver, microdispersion promoter, polymer alloy former, functional molding material and agent for providing solubility to a polymer and which permits a high graft efficiency to be obtained.

Heretofore, ethylene polymers and copolymers have been used extensively owing to their excellent characteristics, and there are attempts to improve their characteristics and to use them in new fields.

For example, low density ethylene polymers have been used as molding material because of their moldability and satisfactory physical and chemical properties of their products. Further, it has been put into practice to mix vinyl polymers, e.g., polystyrene, with low density ethylene polymers as molding material, in order to improve the rigidity, dimensional stability and printing property, for instance, of the low density ethylene polymers.

It is well known in the art that epoxy-group-containing olefin copolymers provide a satisfactory adhesive force as adhesive to bond together metal and plastic material due to their polarity. Further, since they have a good elasticity and good reactive properties, they are used as condensation polymers ; particularly, they are used as impact improving agents by being reacted with engineering plastics.

Since the ethylene-(meth) acrylic ester copolymers and -olefin-vinyl ester copolymers have an excellent flexibility, weather-proof properties and shock resistance, they are extensively used as molding material, and -olefin-vinyl ester copolymers are also broadly used for hot-melt adhesives. Further, recently there have been attempts to use both copolymers as shock resistance improving agents for engineering plastics.

Since ethylene-propylene copolymer rubber and ethylene-propylene-diene copolymer rubber have an excellent rubber elasticity, flexibility, coldness-proof properties and weather-proof properties they are extensively used as rubber material, and also recently there are attempts to use them as shock resistance improving agents for engineering plastics.

However, since olefin (co-and/or) polymers and vinyl polymers are not satisfactorily soluble in each other, it is not practical to incorporate more than 10 % by weight of vinyl copolymer. Usually, the vinyl polymer is incorporated only by 0. 2 to 5 % by weight. Even when such a small quantity of vinyl copolymer is mixed, the shock resistance of the mixtures is reduced due to the unsatisfactory mutual solubility of the two resins, and also a deteriorated appearance is liable to occur.

Further, when ethylene copolymers are used as shock resistance improving agents, a sufficient shock resistance improvement effect cannot be obtained because of the low mutual solubility and dispersion properties.

For example, in case of the epoxy-group-containing olefin copolymer, the scope of applications is limited to materials which can react with the epoxy group. Therefore, a sufficient adhesive force cannot always be obtained with materials which do not react with the epoxy group, e.g., vinyl copolymers, or a sufficient shock resistance cannot be obtained due to the low dispersion force with respect to the materials.

Therefore, there have been attempts to increase the solubility with engineering plastics.

For example, there have been attempts to increase the solubility with the engineering plastics by increasing the proportion of ethylene-(meth) acrylic ester copolymers and α-olefin-vinyl ester copolymer with respect to (meth) acrylic ester or vinyl ester. Further, it has been attempted to introduce functional groups such as an epoxy group, carboxyl group and acid anhydride group for reaction with residual functional groups of engineering plastics, particularly condensation engineering plastics, to increase the solubility and improve the shock resistance improvement effect.

In the meantime, it is well-known in the art that graft copolymers, in which a polymer having a high solubility with other resins and a functional polymer are chemically combined in a molecule, are preferred to improve the solubility with respect to other resins.

Generally, as a method of graft combining a vinyl polymer with an olefin polymer, there has been proposed an olefin polymer, which is obtained by graft polymerizing a vinyl monomer, e.g., styrene polymer, with an olefin polymer by irradiation with ionizable radiation. This method provides for a uniform dispersion of the vinyl copolymer in the olefin (co-and/or) polymer.

A further well-known method is the liquid graft polymerization method making use of a solvent such as xylene or toluene. Another known method is the emulsification graft polymerization method.

Further, it has been proposed to impregnate olefin polymer particles with vinyl monomers and to cause polymerization of the resultant system using an aqueous suspension (as disclosed in Japanese Patent Publication Sho 58-51010 and Japanese Patent Publication sho 58-53003). According to this method, in the polymerized resin composition, the vinyl polymer is uniformly mixed. With this method, satisfactory results can be obtained in comparison to other methods.

More specifically, the method of irradiation with ionizable radiant rays is based on a special process of a radiation graft polymerization process. Therefore, this method is not economical and difficult to be put into practice. Further, in this method there is a limitation in the amount of vinyl monomers to be introduced.

Further, in the solution graft polymerization process, the polymerization is carried out in a state in which the system to be graft polymerized is diluted with a large quantity of solvent, from the standpoint of the solubility of the olefin polymer. Consequently there is less opportunity of contact of vinyl monomers, polymerization initiators, and olefin polymers with one another, and generally the reaction efficiency of the vinyl monomers is low. Further, there are complicated after-treatment steps of the vinyl monomers, which is economically disadvantageous. Further, there is an emulsified graft polymerization process. In this case, the reaction is limited only to the on-surface reactions of the olefin polymer particles.

In the process of polymerization in a water suspension, the graft efficiency of the resin composition obtained is low. Therefore, vinyl polymer particles which have been uniformly dispersed at the end of the completion of the polymerization, are liable to be aggregated secondarily due to heating in the secondary processing or contact with the solvent, thus giving rise to problems when using the obtained resin composition as microdispersion promoters, compatibilizers of polymer alloy and agents for providing polymer solubility.

EP-A-0 206 644 discloses a block copolymer obtained by radically copolymerizing a (meth)acrylic acid ester with a radical polymerizable organic peroxide and further copolymerizing a vinyl monomer with said (meth)acrylic ester.

Kobunishi Robunshu, vol. 44, no. 2 (1987) discloses a process for grafting a block copolymer obtained by polymerizing a monomer having a peroxide bond onto polyolefins by kneading or extruding the reaction process conforming to the scheme: 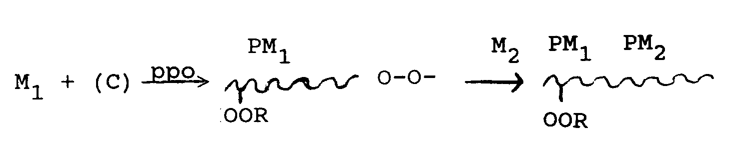
wherein M₁ and M₂ are a first and a second vinyl monomer, respectively, ppo is a polymeric peroxide and (C) is a radical polymerizable peroxide.

It is the object underlying the present invention to provide a graft polymerization precursor obtainable by copolymerizing a radical polymerizable organic peroxide and vinyl monomer, having an increased graft efficiency, and a method for its production.

According to the present invention this object is attained with a graft polymerization precursor obtainable by copolymerizing, in the presence of (D) a radical polymerization initiator having a decomposition temperature of 40 to 90°C for obtaining a half reduction period of 10 hours, in
(A) 100 parts by weight of ethylene homopolymer or copolymer or mixtures thereof
(B) 5 to 400 parts by weight of one or more vinyl monomers selected from the group consisting of vinyl aromatic monomers, acrylic or methacrylic ester monomers or mixtures thereof, acrylonitrile or methacrylonitrile or mixtures thereof, and vinyl ester monomers and
(C) one or more radical polymerizable organic peroxides represented by general formula (I) 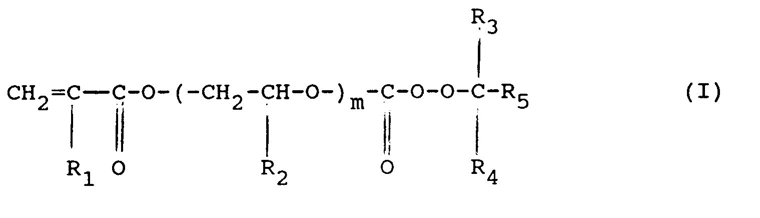 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2,
   or represented by general formula (II) 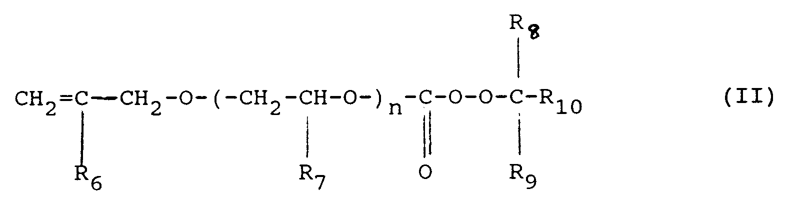 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group or a C₃₋₁₂ cycloalkyl group, and n is 0, 1 or 2,
   said component (C) being incorporated in a proportion of 0.1 to 10 parts by weight with respect to 100 parts by weight of said vinyl monomer or monomers (B), said component (D) constituting 0.01 to 5 parts by weight of the sum of said vinyl monomers (B) and said radical polymerizable organic peroxide (C), and said graft polymerization precursor containing 20 to 95% by weight of the ethylene polymer and 80 to 5% by weight of the vinyl peroxide copolymer containing 0.01 to 0.73% by weight of active oxygen.

According to the present invention there is also provided a method of manufacturing a graft polymerization precursor according to claim 1 comprising the steps of:
- suspending 100 parts by weight of ethylene homopolymer, copolymer or mixtures thereof (A) in water,
- adding to the resultant suspension a solution obtained by dissolving in 5 to 400 parts by weight of one or more vinyl monomers (B) selected from a group consisting of vinyl aromatic monomers, acrylic or methacrylic ester monomers, and mixtures thereof, acrylonitrile or methacrylonitrile and mixtures thereof, and vinyl ester monomers, from 0.1 to 10 parts by weight with respect to 100 parts by weight of said vinyl monomers (B) of one or more radical polymerizable organic peroxides (C) represented by general formula (I) 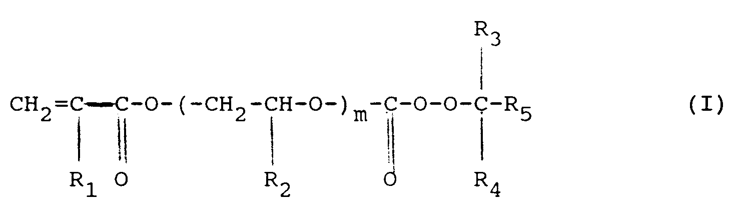 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2,
   or represented by general formula (II) 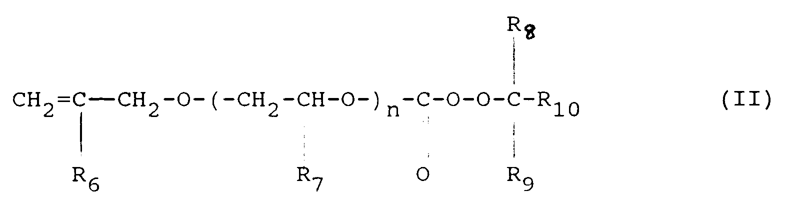 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group or a C₃₋₁₂ cycloalkyl group,and n is 0, 1 or 2,
   and a radical polymerization initiator (D) with a decompostion temperature of 40 to 90°C for obtaining a half reduction period of 10 hours such that it constitutes 0.01 to 5 parts by weight per 100 parts by weight of the sum of said vinyl monomers (B) and said radical polymerizable organic peroxide (C),
   heating the resultant mixture to less than the decomposition of said initiator (D) until said ethylene polymer is impregnated with at least 50% by weight of said vinyl monomers (B), radical polymerizable organic peroxide (C) and radical polymerization initiator (D), and
   elevating the temperature of the thus obtained aqueous suspension to cause copolymerization of said vinyl monomers (B) and said radical polymerizable organic peroxide (C) in said ethylene polymer (A).

Preferred embodiments of the present invention are set forth in the dependent claims.

An ethylene polymer useful in the invention has a low density, preferably of 0.910 to 0.935 g/cm, and examples thereof are an ethylene polymer obtained by the high pressure polymerization process and copolymers of ethylene and α-olefin for density control, e.g., propylene, butene-1 and pentene-1.

The low density ethylene polymer may be in the form of pellets with diameters of 1 to 5mm or in powdery form. The shapes may be suitably selected according to the proportion of low density ethylene polymer in the graft polymerization preformer. For example, when the amount of the low density ethylene polymer in the graft polymerization precursor is 50 % by weight or above, pellets are suitable. If it is less than 50 % by weight, it may be in the powder form.

An epoxy-group-containing ethylene copolymer according to the invention is obtained through copolymerization of ethylene and (meth) acrylic glycidyl ester or mixtures thereof.

(Meth) acrylic glycidyl ester is preferably incorporated for copolymerization in an amount (ratio) of 0.5 to 40 % by weight, preferably 2 to 20 % by weight. If the ratio is less than 0.5 % by weight, a sufficient effect cannot be obtained when the precursor is used as shock resistance promoter. If the ratio exceeds 40 % by weight, the fluidity is reduced when the precursor is melted.

When the ratio of (meth) acrylic glycidyl ester is less than 40 % by weight, it is possible to select for copolymerization one or more members of the group consisting of (meth) acrylic ester monomers, e.g., methyl (metha) acrylate, vinyl ester monomers, e.g., vinyl acetate and vinyl propionate, other vinyl monomers, (meth) acrylonitrile, vinyl aromatic monomers and carbon monoxide in accordance with the invention.

Examples of the epoxy-group-containing copolymer are ethylene-methacrylic glycidyl ester copolymer, ethylene-vinyl acetate-methacrylic glycidyl ester copolymer, ethylene-carbon monoxide-methacrylic glycidyl ester copolymer, ethylene-acrylic glycidyl ester copolymer and ethylene-vinyl acetate-acrylic glycidyl ester copolymer. Among these examples, ethylene-methacrylic glycidyl ester copolymer is most preferred.

The epoxy-group-containing ethylene copolymers noted above may be used in combination.

The epoxy-group-containing ethylene copolymer may be in the form of particles or pellets with diameters ranging from 0.1 to 5 mm . The shapes are suitably selected according to the proportion of epoxy-group-containing ethylene copolymer. If the diameter is excessively large, not only is the dispersion difficult at the time of the polymerization, but also is the period of impregnation of the vinyl monomer, for instance, extended.

Examples of ethylene-(meth) acrylic ester copolymer are ethylene-methyl(meth) acrylate copolymer, ethylene-ethyl(meth) acrylate copolymer and ethylene-butyl(meth) acrylate copolymer. Of these example, ethylene-ethylacrylate copolymer is most suited.

In the ethylene-(meth) acrylic ester copolymer, the (metha-and/or) acrylic ester copolymer is preferably incorporated in an amount (ratio) of 1 to 50 % by weight, preferably 2 to 40 % by weight. If the copolymerization ratio is 1 % by weight or less, a sufficient effect cannot be obtained when the preformer is used as a shock resistance promoter. If the ratio exceeds 50 % by weight, the moldability is reduced.

The shape and proportion of the ethylene-(meth) acrylic ester copolymer are like those of the epoxy-group-containing ethylene copolymer. An ethylene-vinyl ester copolymer useful in the invention is preferably obtained through copolymerization of ethylene and one or more vinyl ester monomers selected from the group consisting of vinyl acetate, vinyl propionate, vinyl caprylate, vinyl laurate, vinyl stearate and vinyl trioflouroacetate in the presence of a radical polymerization initiator. Of these examples, ethylene-vinyl acetate copolymer is most suited.

The copolymerization ratio of the vinyl ester monomers in the ethylene-vinyl ester copolymer is the same as the ratio of the (meth) acrylic ester, copolymer in the ethylene-(meth) acrylic ester copolymer.

The shape and proportion of the ethylene-vinyl ester copolymer are like those of the ethylene-(meth) acrylic ester copolymer.

An ethylene-propylene copolymer rubber or ethylene-propylene-diene copolymer rubber useful in the invention is an ethylene-propylene copolymer rubber, which preferably contains 40 to 80 % by weight of ethylene and 60 to 20 % by weight of propylene and has a Mooney viscosity of 15 to 90, and tertiary copolymerized rubber, which is preferably composed of 40 to 80 % of ethylene and 60 to 20 % by weight of propylene and contains a non-conjugated diene component, such as ethylidene norbornene, 1, 4-hexadiene and dicyclopentadiene. Suitably, its diene content is 4 to 30 in terms of iodination, and its Mooney viscosity is 15 to 120.

The Mooney viscosity is obtained in conformity to JISK 6300 (100°C).

The ethylene-propylene copolymer rubber and ethylene-propylene-diene copolymer rubber may also be used as their mixtures.

To facilitate the impregnation of vinyl monomers and to prevent aggregation at the time of suspension polymerization, the particles of the ethylene-propylene copolymer rubber or ethylene-propylene-diene copolymer rubber are suitably pellets in a narrow diameter range and with diameters of 2 to 8 mm. If the diameter is excessive, not only the dispersion at the time of the polymerization, but also the speed of impregnation of vinyl monomers is reduced to extend the reaction time.

Specific examples of the vinyl monomer according to the invention are vinyl aromatic monomers, e.g., styrene, nucleus substituted styrene, e.g., methyl styrene, dimethyl styrene, ethyl styrene, isopropyl styrene and chloro-substituted styrene, α-substituted styrenes, e.g., α-methyl styrene (meth) acrylic ester monomers, e.g., alkyl esters with a carbon number of 1 to 7 of (meth) acrylic acid, (meth) acrylonitrile, and vinyl ester monomers, e.g., vinyl propionate, vinyl acetate, vinyl caproate, vinyl caprylate, vinyl laurate, vinyl stearate and vinyl trifluoroacetate.

Further, it is possible to use halogenated vinyl and vinylidene (particularly, vinyl chloride and vinylidene chloride), vinyl naphthalene, vinyl carbazole, acrylamide, methacrylamide, maleic anhydride, and others. These components may be used either alone or in combination.

Of these compounds, vinyl aromatic monomers and (meth) acrylic ester monomers are preferred.

Preferably, 50% or more by weight of the vinyl monomers consists of vinyl aromatic monomers, (meth)acrylic ester monomers, or mixtures of the latter.

Particularly, in application as shock resistance improvement agents for engineering plastics, it is desirable to use the product obtained by the (co-and/or) polymerization of mixtures containing 50 % or above of vinyl aromatic monomers and (meth) acrylic ester monomers. The reason is that it has a satisfactory solubility in engineering plastics.

Particularly, hydrophilic or solid vinyl monomers are suitably dissolved in monomers soluble with respect to oil when they are used.

The vinyl monomers are incorporated in an amount of 5 to 400 parts by weight, preferably 10 to 200 parts by weight, with respect to 100 parts by weight of the ethylene polymer.

If the amount is less than 5 parts by weight, sufficient performance as graft is difficult to be obtained in spite of the fact that the graft after the grafting reaction has a high graft efficiency.

When the amount exceeds 400 parts by weight, the proportion of vinyl monomer, radical polymerizable organic peroxide represented by the formulae I and II and radical polymerization initiator that is not impregnating the ethylene polymer is liable to exceed 50 % by weight, thus increasing the amount of vinyl monomers free in the system.

According to Japanese Patent Publication Sho 58-51010 or Japanese Patent Publication Sho 58-53003, it is taught that in the water suspension polymerization process it is necessary that the amount of free vinyl monomers is less that 20 % by weight.

According to the invention, however, the graft polymerization precursor has a peroxide group in its vinyl polymer molecule and has a grafting function. Therefore, a sufficiently excellent grafting function can be obtained even if the sum of free vinyl monomer, radical polymerizable organic peroxide represented by formula I or II is above 20 % by weight in sofar as its content is less than 50 % by weight.

The radical polymerizable organic peroxide which is used in accordance with the invention, is represented by formula I or II.

Specific examples of the compound represented by the formula I are t-butylperoxyacryloyloxyethyl carbonate, t-amylperoxyacryloyloxyethyl carbonate, t-hexylperoxyacryloyloxyethyl carbonate, 1, 1, 3, 3-tetramethylethylbutylperoxyacryloyloxyethyl carbonate, cumylperoxyacryloyloxyethyl carbonate, p-isopropylcumylperoxyacryloyloxyethyl carbonate, t-butylperoxymethacryloyloxyethyl carbonate, t-amylperoxymethacryloyloxyethyl carbonate, t-amylperoxymethacryloyloxyethyl carbonate, t-hexylperoxymethacryloyloxyethyl carbonate, 1, 1, 3, 3-tetramethylbutylperoxymethacryloyloxyethyl carbonate, cumylperoxymethacryloyloxyethyl carbonate, p-isopropylcumylperoxymethacryloyloxyethyl carbonate, t-butylperoxyacryloyloxyethoxyethyl carbonate, t-amylperoxyacryloyloxyethoxyethyl carbonate, t-hexylperoxyacryloyloxyethoxyethyl carbonate, 1, 1, 3, 3-tetramethylbutylperoxyacryloyloxyethoxyethyl carbonate, cumylperoxyacryloyloxyethoxyethyl carbonate, p-isopropylcumylperoxyacryloylethoxyethyl carbonate, t-butylperoxymethacryloyloxyethoxyethyl carbonate, t-amylperoxymethacryloylethoxyethyl carbonate, t-hexylperoxymethacryloyloxyethoxyethyl carbonate, 1, 1, 3, 3-tetramethylbutylperoxymethacryloyloxyethoxyethyl carbonate, cumylperoxymethacryloyloxyethyoxyethyl carbonate, p-isopropylcumylperoxymethacryloyloxyethoxyethyl carbonate, t-butylperoxyacryloyloxyisopropyl carbonate, t-amylperoxyacryloyloxyisopropyl carbonate, t-hexylperoxyacryloyloxyisopropyl carbonate, 1, 1, 3, 3-tetramethylbutylperoxyacryloyloxyisopropyl carbonate, cumylperoxyacryloyloxyisopropyl carbonate, p-isopropylcumylperoxyacryloyloxyisopropyl carbonate, t-butylperoxymethacryloyloxyisopropyl carbonate, t-amylperoxymethacryloyloxyisopropyl carbonate, t-hexylperoxymethacryloyloxyisopropyl carbonate, 1, 1, 3, 3-tetramethylbutylperoxymethacryloyloxyisopropyl carbonate, 1, 1, 3, 3-tetramethylbutylperoxymethacryloisopropyl carbonate, cumylperoxymethacryloyloxyisopropyl carbonate, p-isopropylcumylperoxymethacryloyloxyisopropyl carbonate.

Specific examples of the compound represented by the formula II are t-butylperoxyallyl carbonate, t-hexylperoxyallyl carbonate, 1, 1, 3, 3-tetramethylbutylperoxyallyl carbonate, p-menthanperoxyallyl carbonate, t-butylperoxymethallyl carbonate, t-amylperoxymethallyl carbonate, t-hexylperoxymethallyl carbonate, 1, 1, 3, 3-tetramethylbutylperoxymethallyl carbonate, p-menthanperoxymethallyl carbonate, cumylperoxymethacryl carbonate, t-amylperoxyallyloxyethyl carbonate, t-hexylperoxyacryloxyethyl carbonate, t-butylperoxymethallyloxyethyl carbonate, t-amylperoxymethallyloxyethyl carbonate, t-hexylperoxymethallyloxyethyl carbonate, t-butylperoxyallyloxyisopropyl carbonate, t-amylperoxyallyloxyisopropyl carbonate, t-hexylperoxyallyloxyisopropoyl carbonate, t-butylperoxymethacryloxyisoprooyl carbonate, t-amylperoxymethallyloxyisopropyl carbonate and t-hexylperoxymethallyloxyisopropyi carbonate.

Among these compounds, t-butylperoxyacryloyloxy ethyl carbonate, t-butylperoxymethacryloyloxyethyl carbonate, t-butylperoxyallyl carbonate and t-butylperoxymethallyl carbonate are preferred.

The radical polymerizable organic peroxide is incorporated in an amount of 0.1 to 10 parts by weight with respect to 100 parts by weight of vinyl monomers.

When the proportion is less than 0.1 parts by weight, the amount of active carbon of the graft polymerization precursor according to the invention is insufficient, so that it is difficult to display a sufficient grafting function.

When the amount exceeds 10 parts by weight, the radical polymerizable organic peroxide is inductively decomposed during the polymerization, so that a large amount of gel is generated in the graft polymerization precursor at the instant of the end of the polymerization. Further, although the grafting capacity of the graft polymerization precursor is increased, the gel formation capacity is also increased, which is undesirable.

The radical polymerization initiator which is used according to the invention, has a decomposition temperature for obtaining a half reduction period of 100 h (hereinafter referred to as 10-h half reduction period) of 40 to 90°C, preferably 50 to 75°C. The polymerization according to the invention, has to be carried out under such a condition that the radical polymerizable organic peroxide is not decomposed at all. Meanwhile, the 10-h half reduction period temperature for the radical polymerizable organic peroxide is 90 to 110°C; the polymerization temperature should be less than 110°C.

If the 10-h half reduction period temperature of the radical polymerization initiator exceeds 90°C, the polymerization temperature is increased, so that the radical polymerizable organic peroxide may be decomposed during the decomposition. If the 10-h half reduction period is less than 40°C, polymerization is initiated during the process of impregnating the ethylene polymer with vinyl monomers. The term "10-h half reduction period temperature" means the temperature, at which the polymerization initiator is decomposed by 50 % when 10 h have passed at a certain temperature after the addition of 0.1 mol of the polymerization initiator to a little of benzene.

Specific examples of such a radical polymerization initiator are di-isopropylperoxy dicarbonate (40.5°C), di-n-propylperoxy dicarbonate (40.5°C), dimyristylperoxy dicarbonate (40.9°C), di-(2-ethoxyethyl) peroxy dicarbonate (43.4°C), di(methoxyisopropyl) peroxy dicarbonate (43.5°C), di(2-ethylhexyl) peroxy dicarbonate (43.5°C), t-hexylperoxyneodecanoate (44.7°C), di(3-methyl-3-methoxybutyl) peroxy dicarbonate (46.5°C), t-butylperoxyneodecanoate (46.50°C), t-hexylperoxyneohexanoate (51.3°C), t-butylperoxyneohexanoate (53°C), 2, 4-dichlorobenzoyl peroxide (53°C), t-hexylperoxypivalate (53.2°C) t-butylperoxypivalate (55°C), 3, 5, 5-trimethylhexanoyl peroxide (59.5°C), octanoyl peroxide (62°C), lauroyl peroxide (62°C), cumylperoxy octoate (65.1°C), acetyl peroxide (68°C), t-butylperoxy-2-ethylhexanoate (72.5°C), m-toluoyl peroxide (73°C), benzoyl peroxide (74°C), t-butylperoxy isobutylate (78°C), 1, 1-bis (t-butylperoxy) -3, 5, 5-triethylcyclohexane (90°C). (Figures in parentheses represent 10-h half reduction period temperatures.)

The radical polymerization initiator is used in an amount of 0.01 to 5 parts by weight, preferably 0.1 to 2.5 parts by weight, with respect to 100 parts by weight of the sum of the vinyl monomer and the radical polymerizable organic peroxide. If the amount used is less than 0.01 parts by weight, a perfect polymerization of the vinyl monomer and the radical polymerizable organic peroxide cannot be obtained. If the amount exceeds 5 % by weight, crosslinking of the ethylene polymers tend to occur during the polymerization as well as an induced decomposition of the radical polymerizable organic peroxide .

According to the invention, the polymerization is carried out by a usual water suspension polymerization process with the ethylene polymer and a solution prepared separately by agitatedly dispersing a radical polymerization initiator and the radical polymerizable organic peroxide in the vinyl monomer in water in the presence of a suspension agent used for a water suspension polymerization, e.g., a water-soluble polymer such as polyvinyl alcohol, polyvinyl pyrrolidone and methyl cellulose and water-unsoluble inorganic compounds such as calcium phosphate and magnesium oxide.

The concentration of the water suspension may be set as desired. Usually, however, the proportion of the reaction components is 5 to 150 parts by weight with respect to 100 parts by weight of water.

According to the invention, the impregnation of the ethylene polymer with the solution noted above is suitably carried out at an as high temperature as possible. However, when the polymerization commences with the decomposition of the radical polymerization initiator at the time of the impregnation, the composition of the graft polymerization preformer that is formed becomes very non-homogeneous. Therefore, the impregnation is usually suitably carried out at a temperature 5°C or more lower than the 10-h half reduction period temperature of the radical polymerization initiator used.

The sum of the amounts of free vinyl monomer, radical polymerizable organic peroxide and radical polymerization initiator after the impregnation should be less than 50 % by weight, preferably less than 20 % by weight, with respect to their initial amount used. If the sum exceeds 50 % by weight, the grafting capacity of the graft polymerization precursor according to the invention is extremely reduced. The amount of free vinyl monomer, radical polymerizable organic peroxide and radical polymerization initiator is calculated by sampling a given quantity of water suspension, quickly filtering the sampled liquid using a metal filter of about 0.04 mm (300 mesh) to separate the ethylene polymer and the liquid phase and measuring the quantities of vinyl monomer, radical polymerizable organic oxide and radical polymerization initiator in the liquid phase.

According to the invention, the polymerization is usually carried out at a temperature of 30 to 110°C, in order to prevent the decomposition of the radical polymerizable organic peroxide during the polymerization.

If the temperature exceeds 110°C, the amount of decomposition of the radical polymerizable organic peroxide that is decomposed is increased, which is undersirable. The polymerization period is usually suitably 2 to 20 h.

In the graft polymerization precursor according to the invention, the vinyl peroxide copolymer should contain 0.01 to 0.73 % by weight of active oxygen.

If the content of active oxygen is less than 0.01 % by weight, the grafting capacity of the graft polymerization precursor is extremely reduced.

If the content exceeds 0.73 % by weight, the gel formation capacity is increased, which is also undesirable.

The active oxygen content can be calculated by extracting the vinyl polymer from the graft polymerization precursor according to the invention by solvent extraction and obtaining the active oxygen content of the vinyl polymer by the iodometric method.

The graft polymerization precursor according to the invention can be grafted by merely heating it. For example, a resin composition having a high grafting efficiency can be obtained by causing thermal fusion using for instance, an extruder, an extrusion molder or a mixer

The graft polymerization precursor permits the preparation of a resin composition having a high grafting efficiency by mere heating.

It is thus thought that in the resin composition obtained by the heating process the aggregation of vinyl monomer due to the secondary processing is reduced compared to a composition obtained by the prior art water suspension polymerisation.

Further, the method of manufacturing a graft polymerization precursor according to the invention is a water suspension polymerization process. Therefore, it is possible to readily manufacture a large amount of graft polymerization precursor without the need of any particular apparatus.

Further, it is possible to introduce a large quantity of vinyl polymer compared to the prior art method of manufacture.

The invention will now be described in further detail in conjunction with the examples and comparative examples.

### [Example 1]

2,500 g of pure water were charged into a stainless steel autoclave with a volume of 5 ℓ and 2.5 g of polyvinyl alcohol were dissolved as a suspension agent.

Further, 700 g of low density ethylene polymer with a density of 0.925 g/cm (available under the trade name "miscasene 6-401", by Sumitomo Kagaku Kogyo, with a grain size of 3 to 4 mm) were charged and dispersed by agitation. Separately, 1.5 g of benzoyl peroxide (available under a trade name "Niber-B" by Nippon Yushi Co., Ltd., with 10-h half reduction period temperature of 74°C) as radical polymerization initiator and 6 g of t-butylperoxymethacryloyloxyethyl carbonate as radical polymerizable organic peroxide were dissolved in 300 g of styrene, and the resultant solution was charged into the autoclave, and the resultant solution was agitated.

Then, the autoclave was heated to elevate its temperature to 60 to 65°C, and the system was agitated for one hour, whereby the low density ethylene polymer was impregnated with the vinyl monomer containing the radical polymerization initiator and radical polymerizable organic peroxide. Subsequently, after confirming that the content of free vinyl monomer, radical polymerizable organic peroxide and radical polymerization initiator was less than 50 % by weight of the initial amount, the temperature was elevated to 80 to 85°C, and the system was held at this temperature for 7 h to complete the polymerization, followed by washing with water and drying to obtain a graft polymerization precursor.

This graft polymerization precursor was rendered into film using a press, and the styrene copolymer content was calculated from the characteristic polystyrene absorption of an infrared absorption spectrum of 1,603 cm⁻¹.

Further, an extraction from this graft polymerization precursor was carried out at room temperature for 7 days using ethyl acetate to obtain a styrene solution, which was charged into methanol to obtain a white powdery styrene polymer.

The active oxygen content in this styrene polymer was measured by the iodometry method, and it was 0.13 % by weight. This graft polymerization precursor was subjected to extraction in a Soxhlet extractor with xylene. No product remaining undissolved in xylene was found.

### [Reference Example 1]

The graft polymerization precursor obtained in Example 1 was kneaded at 180°C for 10 min using a laboratory plast mill "B-75 Type Mixer" for the grafting reaction.

After the grafting reaction, the resultant system was subjected to an extraction in a Soxhlet extractor with ethyl acetate to extract the non-grafted styrene polymer.

The extracted non-grafted styrene polymer was 3.3 % by weight with respect to the total amount.

Thus, the grafting efficiency of the styrene polymer was calculated to be 89 % by weight.

Further, in the extraction with xylene, the insoluble part in xylene was 17.5 % by weight.

This insoluble part in xylene was analyzed by the pyrolysis decomposition gas chromatography. It was found that the contents of the low density ethylene polymer and the styrene polymer were respectively 79.0 and 21.0 % by weight.

### [Comparative Example 1]

A graft polymerization precursor was prepared in the same manner as Example 1 except for that no t-butylperoxymethacryloyloxyethyl carbonate was used.

With this graft polymerization precursor, the contents of the styrene polymer, active oxygen and insoluble part in xylene were measured in the same manner as in Example 1. They were respectively 29, 0 and 0 % by weight.

The grafting efficiency of this graft polymerization precursor was obtained by causing the grafting reaction in the manner as in Reference Example 1.

It was 1 % by weight, that is, this graft polymerization precursor had substantially no grafting capacity.

### [Comparative Example 2]

A graft polymerization precursor was prepared in the same manner as in Example 1 except for that dicumylperoxide was used in lieu of t-butylperoxymethacryloyloxyethyl carbonate.

In this case, the contents of the styrene polymer, active oxygen and insoluble part in xylene were respectively 29, 0.01 and 0 % by weight.

The active oxygen content of 0.01 % by weight is thought to be due to the fact that dicumylperoxide extracted with ethyl acetate was dissolved in a methanol/ethyl acetate solvent as re-precipitation solvent and distributed into low density ethylene polymer during the polymerization.

This graft polymerization precursor was analyzed in the same manner as in Reference Example 1 to find that the grafting efficiency with respect to the low density ethylene polymer and the styrene polymer was 6.7 % by weight. It was thought that dicumylperoxide caused inter-molecule bridging of the low density ethylene polymer.

Further, the insoluble part in xylene content was 35 % by weight, and the composition consisted of 99.0 % by weight of low density ethylene polymer and 1.0 % by weight of styrene polymer. The non-dissolved ethyl acetate content at the time of the grafting efficiency calculation was 28 % by weight.

### [Example 2]

A graft polymerization precursor was prepared in the same manner as in Example 1 except for that 300 g of methyl methacrylate in lieu of 300 g of styrene were used.

This graft polymerization precursor was analyzed in the same manner as in Example 1. It was found that the methyl methacrylate polymer content was 26 % by weight (the determination based on an infrared absorption spectrum being carried out at 1,720 to 1,730 cm⁻¹), the active oxygen content was 0.12 % by weight and the insoluble part in xylene content was 0 % by weight.

### [Reference Example 2]

The graft polymerization precursor obtained in Example 2 was grafted in the same manner as in Reference Example 1.

### [Comparative Example 3]

The grafting efficiency was 53 % by weight.

2,500 g of pure water were charged into a stainless steel autoclave with a volume of 5 ℓ, and 25 g of polyvinyl alcohol were dissolved as suspension agent. To the resultant system a mixture consisting of 1,000 g of styrene, 5 g of benzoyl peroxide and 20 g of t-butylperoxymethacryloyloxyethyl carbonate was added.

The admixture was subjected to polymerization at 80 to 85°C for 7 h to obtain a peroxide-group-containing styrene polymer composition.

5 g of the peroxide-group-containing styrene polymer composition were dissolved in benzene.

The resultant solution was then charged into methanol to remove any non-copolymerized peroxide, thus obtaining a peroxide-group-containing styrene polymer. As a result, substantially the same styrene polymer as in the case of the Example with an active oxygene content of 0.13 % by weight was obtained.

Then, 70 parts by weight of the low density ethylene polymer used in Example 1 and 30 % by weight of the peroxy-group-containing styrene polymer were mixed together for grafting reaction in the manner as in reference Example 1. The grafting efficiency was 0 % by weight.

The insoluble part in xylene content was 23 % by weight. Of the insoluble part in the composition, the low density ehtylene polymer and the styrene polymer contents were respectively 1 and 99 % by weight.

In other words, in this case no grafting reaction occurred, but only an inter molecular bridging reaction of the styrene polymer occurred.

### [Example 3]

A graft polymerization precursor was prepared in the same manner as in Example 1 except for using 300 g of vinyl acetate in lieu of 300 g of styrene and 20 g of t-butylperoxyallyl carbonate in lieu of 6 g of t-butylperoxymethacryloyloxyethyl carbonate.

This graft polymerization precursor was rendered into a film using a press, and the polyvinyl acetate content was determined from the carbonyl absorption at 1,720 to 1,730 cm⁻¹ of the infrared absorption spectrum. It was 28.5 % by weight.

The thus obtained graft polymerization precursor was subjected to an extraction at room temperature for 7 days with methanol to extract polyvinyl acetate. The system was further charged into petroleum ether to obtain a polyvinyl acetate powder. The active carbon oxygen content of polyvinyl acetate was 0.17 % by weight, the insoluble part in xylene content in the graft polymerization precursor was 1.7 % by weight.

### [Reference Example 3]

A grafting reaction was caused in the same manner as in Reference Example 1 except for using the product obtained in Example 3 in lieu of the graft polymerization and using methanol in lieu of ethyl acetate as extraction solvent for calculating the grafting efficiency. As a result, the grafting efficiency was 65 % by weight.

### [Example 4]

A graft polymerization precursor was obtained in the same manner as in Example 1 except for using 255 g of styrene and 75 g of acrylonitrile as vinyl monomer. The composition of the graft polymerization precursor contained 28 % by weight of vinyl copolymer as determined form the yield at the time of the completion of polymerization (the yield being calculated from the product in the form of pellets, excluding any powdery product, which consists of vinyl copolymers). The content of the active oxygen in the vinyl copolymer as measured in the manner as in Example 1 was 0.13 % by weight. The insoluble part in xylene content was 1 % by weight.

### [Reference Example 4]

Grafting reaction was caused in the same manner as in Reference Example 1 except for using the product obtained in Example 4 as graft polymerization precursor. The grafting efficiency was 72 % by weight.

### [Example 5]

A graft polymerization precursor was obtained in the same manner as in Example 1 except for using lauroyl peroxide (available under the trade name "Perroil L" manufactured by Nippon Yushi Co., Ltd. with a 10-h half reduction period temperature of 62°C) in lieu of benzoyl peroxide as radical polymerization initiator and setting the polymerization temperature and time correspondingly to 70 to 75°C and 9 h , respectively.

This graft polymerization precursor had a composition containing 29 % by weight of styrene polymer, 0.12 % by weight of active oxygen contained in the styrene polymer and 0 % by weight of insoluble part in xylene.

### [Comparative Example 4]

A graft polymerization precursor was obtained in the same manner as in Example 1 except that t-butylperoxybenzoate (available under the trade name "Perbutyl Z", manufactured by Nippon Yushi Co., Ltd. with a 10-h half reduction period temperature of 104°C ) was used in lieu of benzoyl peroxide as the radical polymerization initiator and that the polymerization temperature and time were correspondingly set to 120°C and 6 h , respectively.

This graft polymerization precursor contained 94 % by weight of insoluble part in xylene. This is thought to be due to the decomposition of t-butylperoxymethacryloyloxyethyl carbonate, giving rise to intermolecular bridging.

### [Comparative Example 5]

A graft polymerization precursor was obtained in the same manner as in Example 1 except that the impregnation temperature was changed to 90°C .

This graft polymerization precursor was a mixture of pellets with diameters in the range of 4 to 5 mm and of particles with diameters in the range of 1 mm or less. The powdery form was found to be a styrene polymer as measured from the pyrolysis gas chromatography, and its yield was 232 g. With this graft polymerization precursor, the content of the active oxygen in the styrene monomer was 0.11 % by weight, the insoluble part in xylene content was 2 % by weight, and the content of styrene polymer, as calculated from the total yield, was 28 % by weight.

The grafting reaction was conducted in the same manner as in Reference Example 1. The grafting efficiency was 19 % by weight.

### [Examples 6 to 9]

Graft polymerization precursors were prepared using a low density ethylene polymer, styrene, benzoyl peroxide, t-butylperoxymethacryloyloxyethyl carbonate in the quantities as listed in Table 1.

These graft polymerization precursors were subjected to a grafting reaction in the same manner as in Reference Example 1, and the grafting efficiency and insoluble part in xylene content of the resultant grafted systems were measured. The results are shown in Table 1.

### [Comparative Examples 6 to 9]

Graft polymerization precursors were manufactured by using a low density ethylene polymer, styrene, benzoyl peroxide and t-butylperoxymethacryloyloxyethyl carbonate as in Example 1 in the quantities as shown in Table 2.

Further, these graft polymerization precursors were subjected to a grafting reaction in the same manner as in Reference Example 1, and the grafting efficiency and insoluble part in xylene content of the resultant grafted systems were measured.

The results are shown in Table 2.

### [Comparative Example 10]

A graft polymerization precursor was prepared in the manner as shown in Example 1 except that cumyl-peroxyneodecanoate (available under the trade name "Percumyl ND" manufactured by Nippon Yushi Co.,Ltd. with a 10-h half reduction period temperature of 36.6°C) was used in lieu of benzoyl peroxide as radical polymer initiator and that the impregnation temperature and time were set to 35°C and 2 h , respectively, and the polymerization temperature was set to 60°C.

This graft polymerization precursor was covered by a transparent resin, and the powdery product, consisting of the styrene polymer, was attained in an amount of 63 % by weight of the charged amount of styrene.

This graft polymerization precursor was subjected to a grafting reaction in the same manner as in Reference Example 1.

The grafting efficiency was 9 % by weight.

### [Example 10]

A graft polymerization precursor was obtained through polymerization in the same manner as in Example 1 except that an epoxy-group-containing ethylene polymer ( containing 15 % by weight of ethylene methacrylic glycidyl ester copolymer in the form of pellets) was used as the low density ethylene polymer and that the contents of the autoclave were agitated at a temperature of 60 to 65°C for 2 h in lieu of 1h.

This graft polymerization precursor was rendered into film in the same manner as in Example 1, and the content in the styrene polymer was calculated to be 28.7 % by weight.

This graft polymerization precursor was subjected to extraction in the same manner as in Example 1 to obtain a styrene polymer, and the active oxygen content was measured to be 0.13 % by weight.

Further, this graft polymerization precursor was subjected to extraction in the same manner as in Example 1.

No insoluble part in xylene content was found.

### [Reference Example 5]

The graft polymerization precursor as obtained in Example 10 was subjected to a grafting reaction in the same manner as in Reference Example 1.

The product system of the grafting reaction was subjected to an extraction in the same manner as in Reference Example 1 with ethyl acetate to extract any non-grafted styrene polymer.

The extracted styrene polymer was 6.6 % by weight with respect to the total amount.

In the extraction with xylene, the insoluble part in xylene content was 19.3 % by weight. (The grafting efficiency represents the ratio of the grafted polystyrene to the total amount of polymerized polystyrene.)

### [Comparative Example 11]

A graft polymerization precursor was manufactured in the same manner as in Example 10 except that no t-butylperoxymethacryloyloxyethyl carbonate was used.

With this graft polymerization precursor, the styrene polymer, active oxygen and insoluble part in xylene contents were measured in the same manner as in Example 10.

They were respectively 28.5, 0 and 0 % by weight.

This graft polymerization precursor was subjected to a grafting reaction in the same manner as in Reference Example 1, and the grafting efficiency was obtained.

It was 0 % by weight, and there was no grafting capacity at all.

### [Comparative Example 12]

A graft polymerization precursor was manufactured in the same manner as in Example 10 except that dicumyl peroxide was used in lieu of t-butylperoxymethacryloyloxyethyl carbonate.

At this time, the styrene polymer, active oxygen and insoluble part in xylene contents were respectively 28.5, 0.02 and 0 % by weight.

The active oxygen content of 0.02 % by weight is thought to be due to the fact that dicumyl peroxide extracted by ethyl acetate is dissolved in the methanolethyl acetate solvent used as re-precipitation solvent and distributed in the epoxy-group-containing ethylene copolymer during the polymerization.

This graft polymerization precursor was analyzed in the same manner as in Reference Example 1.

The grafting efficiency with respect to the epoxy-group-containing ethylene copolymer and the styrene polymer was 1.4 % by weight.

Substantially no grafting reaction due to dicumyl peroxide occurred.

The insoluble part in xylene content was 35.6 % by weight.

### [Example 11]

A graft polymerization precursor was manufactured in the same manner as in Example 10 except that 300 g of methyl methacrylate were used in lieu of 300 g of styrene.

The content of the methyl methacrylate polymer was measured from the yield of this graft polymerization precursor. It was 27.9 % by weight.

The active oxygen and insoluble part in xylene contents were 0.12 and 0.3 % by weight.

### [Reference Example 6]

The graft polymerization precursor obtained in Example 11 was subjected to grafting in the same manner as in Reference Example 1.

The grafting efficiency of the methylmethacrylate polymer was 65.3 % by weight.

### [Comparative Example 13]

2,500 g of pure water were charged into a stainless steel autoclave with a volume of 5 ℓ, and 2.5 g of polyvinyl alcohol were dissolved as suspension agent.

To the resultant solution a mixture consisting of 1,000 g of styrene, 5 g of benzoyl peroxide and 20 g of t-butylperoxymethacryloyloxyethyl carbonate was added.

The resultant system was subjected to polymerization at 80 to 85°C for 7 h to obtain a peroxy-group-containing styrene copolymer composition.

5 g of the polymer composition were dissolved in benzene, and then methanol was charged to remove any non-copolymerized peroxide, thus obtaining a peroxy-group-containing styrene copolymer.

Substantially the same styrene polymer as obtained in Example 10 was obtained, with the active oxygen content in the copolymer being 0.13 % by weight.

Then, 70 parts by weight of the epoxy-group-containing ethylene copolymer used in Example 10 and 30 parts by weight of the peroxy-group-containing styrene copolymer noted above were mixed together for the grafting reaction in the same manner as in Reference Example 1.

The grafting efficiency of the styrene copolymer was 0 % by weight, the insoluble part in xylene content was 27.2 % by weight, and the insoluble part in xylene content was constituted by self-bridged styrene polymer.

In this case, no grafting reaction occurred, and only the inter-molecular bridging of the styrene copolymer occurred.

### [Example 12]

A graft polymerization precursor was manufactured in the same manner as in Example 10 except that 300 g of vinyl acetate were used in lieu of 300 g styrene and 6 g of t-butylperoxyallyl carbonate in lieu of 6 g of t-butylperoxymethacryloyloxyethyl carbonate.

The content of the vinyl acetate polymer was measured from the yield of the graft polymerization precursor. It was 28.1 % by weight.

This graft polymerization precursor was extracted with methanol at room temperature for 7 days to extract the vinyl acetate polymer. The extracted vinyl acetate polymer was charged into petroleum ether to obtain a vinyl acetate polymer powder. The active oxygen content of the vinyl acetate polymer was 0.15 % by weight.

The insoluble part in xylene content in this graft polymerization precursor was 1.3 % by weight.

### [Reference Example 7]

A grafting reaction was caused in the same manner as in Reference Example 1 except that the product obtained in Example 12 was used as graft polymerization precursor and methanol was used in lieu of ethyl acetate as extraction solvent for calculating the grafting efficiency.

The grafting efficiency was 65.2 % by weight.

### [Example 13]

A graft polymerization precursor was obtained in the same manner as in Example 10 except that 225 g of styrene and 75 g of acrylonitrile were used as vinyl monomer.

From the yield of this graft polymerization precursor, the content of the styrene-acrylonitrile copolymer was determined to be 27.8 % by weight. The active oxygen content and the insoluble part in xylene contents in the styrene-acrylonitrile copolymer measured in the same manner as in Example 10 were 0.13 and 1 % by weight.

### [Reference Example 8]

A grafting reaction was caused in the same manner as in Reference Example 1 except that the product obtained in Example 13 was used as graft polymerization precursor. The grafting efficiency was 72.5 % weight.

### [Example 14]

A graft polymerization precursor was obtained in the same manner as in Example 10 except that lauroyl peroxide (available under the trade name "Perroyl L" manufactured by Nippon Yushi Co., Ltd. with a 10-h half reduction period temperature of 62°C) was used in lieu of benzoyl peroxide as radical polymerization initiator and that the polymerization temperature and time were correspondingly set to 70 75°C and 9 h , respectively. This graft polymerization precursor had a composition consisting of 28 % by weight of styrene polymer, 0.12 % by weight of active oxygen content in the styrene polymer and 0.2 % by weight of insoluble part in xylene.

### [Comparative Example 14]

A graft polymerization precursor was obtained in the same manner as in Example 10 except that t-butylperoxybenzoate (available under the trade name "Perbutyl Z" manufactured by Nippon Yushi, with a 10-h half reduction period temperature of 104°C) was used in lieu of benzoyl peroxide as radical polymerization initiator and that the polymerization temperature and time were correspondingly respectively set to 120 °C and 6 h . This graft polymerization precursor contained 95 % by weight of insoluble part in xylene. This is thought to be due to the occurrence of inter-molecular bridging with the decomposition of t-butylperoxymethacryloyloxyethyl carbonate.

### [Example 15]

A graft polymerization precursor was obtained in the same manner as in Example 10 except that a copolymer consisting of 82 % by weight of ethylene, 12 % by weight of methacrylic glycidyl ester and 6 % by weight of vinyl acetate was used in lieu of the epoxy-group-containing copolymer.

From the yield of the graft polymerization precursor, the content of the styrene polymer was determined to be 28.7 % by weight. The content of the active oxygen in styrene monomer as measured in the same manner as in Example 10 was 0.13 % by weight.

### [Examples 16∼19]

Graft polymerization precursors were manufactured in the same manner as in Example 10 except that the amount of the epoxy-group-containing ethylene copolymer, styrene, benzoyl peroxide, t-butylperoxymethacryloyloxyethyl carbonate were varied as in Table 3. These graft polymerization precursors were subjected to grafting reactions in the same manner as in Reference Example 1. The grafting efficiency and insoluble part in xylene contents of the resultant grafted systems were measured. The results are as shown in Table 3.

### [Comparative Examples 15 to 18]

Graft polymerization precursors were obtained in the same manner as in Example 10 except that the amounts of the epoxy-group-containing ethylene copolymer, styrene, benzoyl peroxide and t-butylperoxymethacryloyloxyethyl carbonate were varied as in Table 4. These graft polymerization precursors were subjected to grafting reactions in the same manner as in reference Example 1. The grafting efficiency and insoluble part in xylene content in the resultant grafted systems were measured. The results were as shown in Table 4.

### [Comparative Example 19]

A graft polymerization precursor was obtained in the same manner as in Example 10 except that cumylperoxyneodecanoate (available under the trade name "Percumyl ND" manufactured by Nippon Yushi Co., Ltd. with a 10-h half reduction period temperature of 36.6°C) was used in lieu of benzoyl peroxide as radical polymerization initiator and that correspondingly the impregnation temperature and time were set to 35°C and 2 h and the polymerization temperature to 60°C. This graft polymerization precursor had its surface covered by a transparent resin. Further, the powdery product, consisting of sole styrene polymer (the impregnated graft polymerization precursor being in the form of pellets) reached 63 % by weight of the charged amount of styrene.

This graft polymerization precursor was subjected to a grafting reaction in the same manner as in reference Example 1. The grafting efficiency was 9.4 % by weight.

### [Example 20]

A graft polymerization precursor was obtained through polymerization caused in the same manner as in Example 1 except that an ethylene-ethyl acrylate copolymer (available under the trade name "Nisseki Rekusuron EEAA-4200 manufactured by Nippon Sekiyu Co., Ltd. containing 20 % by weight of and in the form of pellets) was used in lieu of the low density ethylene polymer and that the agitation of the system was carried out with the autoclave temperature set to 60 to 65°C and being set to 2 h in lieu of 1 h.

This graft polymerization precursor was rendered into a film in the same manner as in Example 1, and the content in the styrene polymer was calculated. It was 29.5 % by weight.

Further, this graft polymerization precursor was subjected to an extraction in the same manner as in Example 1 to extract the styrene polymer, and the active oxygen content therein was measured. It was 0.13 % by weight.

Further, this graft polymerization precursor was subjected to an extraction with xylene in the same manner as in Example 1. The insoluble part in xylene was found.

### [Reference Example 9]

A grafting reaction was caused in the same manner as in Reference Example 1 except that the product obtained in Example 20 was used as graft polymerization precursor.

The product system of the grafting reaction was subjected to an extraction in a Soxhlet extractor with the styrene polymer. The amount of the extracted styrene polymer was 5.9 % by weight with respect to the total amount.

Thus, the grafting efficiency of the styrene polymer was calculated to be 80.3 % by weight. In the extraction with xylene, the insoluble part in xylene was 22.3 % by weight.

### [Comparative Example 20]

A graft polymerization precursor was manufactured in the same manner as in Example 20 except that t-butylperoxymethacryloyloxyethyl carbonate was not used. Of this graft polymerization precursor, the styrene polymer content, active carbon content and insoluble part in xylene content were measured in the same manner as in Example 20. They were respectively 29.3, 0 and 0 % by weight.

Further, this graft polymerization precursor was subjected to a grafting reaction in the same manner as in Reference Example 1, and the grafting efficiency was obtained. The grafting efficiency was 0 % by weight. No grafting capacity was found.

### [Comparative Example 21]

A graft polymerization precursor was manufactured in the same manner as in Example 20 except that dicumylperoxide was used in lieu of t-butylperoxymethacryloyloxyethyl carbonate.

In this case, the styrene polymer content, active oxygen content and insoluble part in xylene content were respectively 29.3, 0.03 and 0 % by weight.

The active oxygen content of 0.03 % by weight is thought to be due to the fact that the dicumylperoxide extracted by ethyl acetate is dissolved in a solvent based on ethanol and ethyl acetate as reprecipitation solvent and distributed in the ethylene-ethyl acrylate copolymer during the polymerization. This graft polymerization precursor was analyzed in the manner as in Reference Example 1. The grafting efficiency with respect to the ethylene-ethyl acrylate copolymer and styrene polymer was 0.8 % by weight. Substantially no grafting reaction due to dicumyl peroxide occurred. The insoluble part in xylene content was 29.7 % by weight.

### [Example 21]

A graft polymerization precursor was manufactured in the same manner as in Example 20 except that 300 g of methyl methacrylate were used in lieu of 300 g of styrene.

The content of methyl methacrylate polymer was obtained from the yield of this graft polymerization precursor. It was 28.5 % by weight. The active oxygen content and insoluble part in xylene content were 0.11 and 0.1 % by weight.

### [Reference Example 10]

The graft polymerization precursor as obtained in Example 21 was subjected to a grafting reaction. The grafting efficiency of the methyl methacrylate polymer was 7.07 % by weight.

### [Comparative Example 22]

2,500 g were charged into a stainless steel autoclave with a volume of 5 ℓ. Further, 2.5 g of polyvinyl alcohol were dissolved as a suspension agent and to the solution a mixture consisting of 1,000 g of styrene, 5 g of benzoyl peroxide and 20 g of t-butylperoxymethacryloyloxyethyl carbonate was added. The admixture was subjected to polymerization at 80 to 85 °C for 7 h to obtain a peroxy-group-containing styrene polymer composition. 5 g of the peroxy-group-containing styrene polymer composition was dissolved in benzene, and the resultant solution was charged into methanol, thereby removing non-copolymerized peroxide to obtain a peroxy-group-containing styrene polymer. This polymer was substantially the same as the polymer obtained in Example 20 and contained 0.13 % by weight of active oxygen. Then, 70 parts by weight of the ethylene-ethyl acrylolate used in Example 20 and 30 parts by weight of the peroxy-group-containing styrene polymer were mixed together, and the resultant mixture was subjected to a grafting reaction in the same manner as in Reference Example 1. The grafting efficiency of the styrene polymer was 0 % by weight, and the non-dissolved xylene content was 31.5 % by weight. Substantially all of the insoluble part in xylene was constituted of a self-bridged styrene polymer.

In this case, no grafting reaction occurred, and only an inter-molecular bridging reaction of the styrene polymer occurred.

### [Example 22]

A graft polymerization precursor was prepared in the same manner as in Example 20 except that 300 g of vinyl acetate were used in lieu of 300 g of styrene and 6 g of t-butylperoxyallyl carbonate in lieu of 6 g of t-butylperoxymethacryloyloxyethyl carbonate. The vinyl acetate polymer content was obtained from the yield of this graft polymerization precursor. It was 28.4 % by weight. Further, this graft polymerization precursor was subjected to an extraction with methanol at room temperature for 7 days to extract the vinyl acetate polymer. The extracted vinyl acetate polymer was charged into petroleum ether to obtain a vinyl acetate polymer powder. The active oxygen content in the vinyl acetate polymer was 0.15 % by weight. The graft polymerization precursor contained 1.9 % by weight of insoluble part in xylene.

### [Reference Example 11]

The grafting reaction was caused in the same manner as in Reference Example 1 except that the product obtained in Example 22 was used as graft polymerization precursor and methanol was used in lieu of ethyl acetate as extraction solvent for calculating the grafting efficiency.

The grafting efficiency was 74.4 % by weight.

### [Example 23]

A graft polymerization precursor was obtained in the same manner as in Example 20 except that 225 g of styrene and 75 g of acrylonitrile were used as vinyl monomer.

The content of styrene-acrylonitrile copolymer was obtained form the yield of the graft polymerization precursor.

It was 29.1 % by weight. The active oxygen content in styrene-acrylonitrile copolymer as measured in the same manner as in Example 20 was 0.13 % by weight.

The insoluble part in xylene content was 0.3 % by weight.

### [Reference Example 12]

The grafting reaction was caused in the same manner as in Reference Example 1 except that the product obtained in Example 23 was used as the graft polymerization precursor.

The grafting efficiency was 77.1 % by weight.

### [Example 24]

A graft polymerization precursor was prepared in the same manner as in Example 20 except that lauroyl peroxide (available under the trade name "Perroyl L" manufactured by Nippon Yushi Co., Ltd. with a 10-h half reduction period temperature of 62°C) was used in lieu of benzoyl peroxide as radical polymerization initiator and that correspondingly the polymerization temperature and time were set to 70 to 75°C and 9 h , respectively.

This graft polymerization precursor had a composition consisting of 28.9 % by weight of styrene polymer, 0.13 % by weight of active oxygen in the styrene polymer and 0.1 % by weight of insoluble part in xylene.

### [Comparative Example 23]

A graft polymerization precursor was obtained in the same manner as in Example 20 except that t-butylperoxybenzoate (available under the trade name "Perbutyl Z" manufactured by Nippon Yushi Co., Ltd. with a 10-h half reduction period temperature of 104°C) was used in lieu of benzoyl peroxide as radical polymerization initiator and that the polymerization temperature and time were set to 120°C and 6 h .

The graft polymerization precursor contained 89 % by weight of insoluble part in xylene.

This is thought to be due to the occurrence of inter-molecular bridging due to the decomposition of t-butylperoxymethacryloyloxyethyl carbonate during the polymerization.

### [Example 25]

A graft polymerization precursor was obtained in the same manner as in Example 20 except that a copolymer consisting of 95 % by weight of ethylene and 5 % by weight of ethyl acrylate (available under the trade name "Nisseki Rekusuron EEA A-3050" manufactured by Nippon Sekiyu Kagaku Co., Ltd.) was used in lieu of the ethylene-ethyl acrylate copolymer. The content of the styrene polymer was obtained from the yield of this graft polymerization precursor.

It was 28.5 % by weight. The active oxygen content in the styrene polymer as measured in the same manner as in Example 20 was 0.12 % by weight.

### [Example 26 to 29]

Graft polymerization precursors were prepared in the same manner as in Example 20 except that the amounts of ethylene-ethyl acrylate copolymer styrene, benzoyl peroxide and t-butylperoxymethacryloyloxyethyl carbonate were varied as shown in Table 5.

These graft polymerization precursors were subjected to grafting reactions in the same manner as in Reference Example 1, and the grafting efficiency and insoluble part in xylene contents of the resultant grafted systems were measured.

The results are shown in Table 5.

### [Comparative Example 24 to 27]

Graft polymerization precursors were prepared in the same manner as in Example 20 except that the amounts of ethylene-ethyl acrylate copolymer, styrene, benzoyl peroxide, t-butylperoxymethacryloyloxyethyl carbonate were varied as shown in Table 6.

These graft polymerization precursors were subjected to grafting reactions in the same manner as in Reference Example 1, and the grafting efficiency and insoluble part in xylene contents in the resultant grafted systems were measured. The results are as shown in Table 6.

### [Comparative Example 28]

A graft polymerization precursor was prepared in the same manner as in Example 20 except that cumylperoxyneodecanoate (available under the trade name "Percumyl ND" manufactured by Nippon Yushi Co., Ltd. with a 10-h half reduction period temperature of 36.6°C) was used in lieu of benzoyl peroxide as radical polymerization initiator and that correspondingly the impregnation temperature and time were respectively set to 35°C and 2 h and the polymerization temperature was set to 60°C.

This graft polymerization precursor had its surface covered by a transparent resin, and the powdery product, constituted by the styrene polymer (the impregnated polymerized graft polymerization precursor being in the form of pellets) reached 54 % by weight of the charged amount of styrene.

This graft polymerization precursor was subjected to the grafting reaction in the same manner as in Reference Example 1.

The grafting efficiency was 10.7 % by weight.

### [Example 30]

A graft polymerization precursor was obtained through polymerization caused in the same manner as in Example 1 except that ethylene-vinyl acetate copolymer (available under the trade name "Nisseki Rekusuron Eva V-270" manufactured by Nippon Sekiyu Co., Ltd. containing 15 % by weight of vinyl acetate and in the form of pellets) was used in lieu of the low density ethylene polymer and that the agitation of the system was carried out with the autoclave temperature set to 60 to 65°C the time being set to 2 h in lieu of 1 h .

This graft polymerization precursor was rendered into a film in the same manner as in Example 1, and the content in the styrene polymer was calculated. It was 29.6 % by weight.

Further, this graft polymerization precursor was subjected to an extraction in the same manner as in Example 1 to extract the styrene polymer, and the active oxygen content therein was measured. It was 0.12 % by weight.

Further, this graft polymerization precursor was subjected to an extraction with xylene in the same manner as in Example 1. Insoluble part in xylene was found.

### [Reference Example 13]

The grafting reaction was caused in the same manner as in Reference Example 1 except that the product obtained in Example 30 was used as graft polymerization precursor.

The product system of the grafting reaction was subjected to extraction in a Soxhlet extractor with ethyl acetate to extract any non-grafted styrene polymer. The extracted styrene polymer was 5.7 % by weight with respect to the total amount.

Thus, the grafting efficiency of the styrene polymer was calculated to be 81 % by weight. In the extraction with xylene, the insoluble part in xylene content was 23.7 % by weight.

### [Comparative Example 29]

A graft polymerization precursor was prepared in the same manner as in Example 30 except that t-butylperoxymethacryloyloxyethyl carbonate was not used.

Of this graft polymerization precursor, the styrene polymer content, active oxygen content and insoluble part in xylene content were measured in the same manner as in Example 30.

They were respectively 29.5, 0 and 0 % by weight.

Further, this graft polymerization precursor was subjected to the grafting reaction in the same manner as in Reference Example 1 to obtain the grafting efficiency. The grafting efficiency was 0.3 % by weight, and there was no grafting capacity.

### [Comparative Example 30]

A graft polymerization precursor was prepared in the same manner as in Example 30 except that dicumyl peroxide was used in lieu of t-butylperoxymethacryloyloxyethyl carbonate.

At this time, the contents of the styrene polymer, the active oxygen content and the insoluble part in xylene content were 29.6, 0.03 and 0 % by weight.

The active oxygen content of 0.03 % by weight is thought to be due to the fact that dicumyl peroxide extracted by ethyl acetate is dissolved in a solvent based on methanol and ethyl acetate as reprecipitation solvent and is distributed in the ethylene-vinyl acetate copolymer during the polymerization.

This graft polymerization precursor was analyzed in the same manner as in Reference Example 1. The grafting efficiency with respect to the ethylene-vinyl acetate copolymer and styrene polymer was 1.2 % by weight, and substantially no grafting reaction due to dicumyl peroxide occurred.

The insoluble part in xylene content was 32.4 % by weight.

### [Example 31]

A graft polymerization precursor was prepared in the same manner as in Example 30 except that 300 g of methyl methacrylate were used in lieu of 300 g of styrene.

The content of the methyl methacrylate polymer was measured from the yield of the graft polymerization precursor.

It was 29.1 % by weight. The contents of the active oxygen and the insoluble part in xylene were 0.12 and 0.3 % by weight.

### [Reference Example 14]

The graft polymerization precursor obtained in Example 31 was subjected to grafting in the same manner as in Reference Example 12. The grafting efficiency of the methyl methacrylate polymer was 72.1 % by weight.

### [Comparative Example 31]

2,500 g of pure water were charged into a stainless steel autoclave with a volume of 5ℓ and 2.5 g of polyvinyl alcohol were dissolved as suspension agent. To the solution was added a mixture consisting of 1,000 g of styrene, 5 g of benzoyl peroxide and 20 g of t-butylperoxymethacryloyloxyethyl carbonate. The admixture was subjected to polymerization at 80 to 85°C for 7 h to obtain a peroxy-group-containing styrene copolymer.

5 g of the polymer composition were dissolved in benzene.

The resultant solution was charged into methanol to remove peroxide remaining without being copolymerized to obtain a peroxy-group-containing styrene copolymer.
This styrene polymer was substantially the same as the one obtained in Example 30, and the active oxygen content in it was 0.12 % by weight.

Then, 70 parts by weight of the ethylene-vinyl acetate copolymer used in Example 30 and 30 parts by weight of the peroxy-group-containing styrene copolymer as noted above were mixed together, and the resultant mixture was subjected to the grafting reaction in the same manner as in Reference Example 13.

The grafting efficiency of the styrene copolymer was 0.2 % by weight, and the insoluble part in xylene content was 34.1 % by weight.

Substantially all of the non-dissolved content was a self-bridged styrene copolymer.

In other words, in this case no grafting reaction occurred, and only an inter-molecular bridging of styrene copolymer occurred.

### [Example 32]

A graft polymerization precursor was prepared in the same manner as in Example 30 except that 300 g of vinyl acetate were used in lieu of 300 g of styrene and 6 g of t-butylperoxyallyl carbonate used in lieu of 6 g of t-butylperoxymethacryloyloxyethyl carbonate.

The content of the vinyl acetate polymer was measured from the yield of this graft polymerization precursor. It was 28.8 % by weight.

Further, this graft polymerization precursor was subjected to an extraction with methanol at room temperature for 7 days to extract the vinyl acetate polymer.

The extracted vinyl acetate polymer was charged into petroleum ether to obtain a vinyl acetate polymer powder.

The active oxygen content in this vinyl acetate polymer was 0.14 % by weight, and the insoluble part in xylene content of this graft polymerization precursor was 1.8 % by weight.

### [Reference Example 15]

The grafting reaction was caused in the same manner as in Reference Example 13 except that the product obtained in Example 32 was used as graft polymerization precursor and that methanol was used in lieu of ethyl acetate as extraction solvent for calculating the grafting efficiency. The grafting efficiency was 82.3 % by weight.

### [Example 33]

A graft polymerization precursor was prepared in the same manner as in Example 30 except that 225 g of styrene and 75 g of acrylonitrile were used as vinyl monomer.

The content of styrene-acrylonitrile copolymer was obtained from the yield of this graft polymerization precursor.

It was 29.4 % by weight. The active oxygen content of styrene-acrylonitrile copolymer as measured in the same manner as in Example 30 was 0.12 % by weight, and the insoulble part in xylene content was 0.1 % by weight.

### [Reference Example 16]

The grafting reaction was caused in the same manner as in Reference Example 13 except that the product obtained in Example 33 was used as graft polymerization precursor. The grafting efficiency was 78.6 % by weight.

### [Example 34]

A graft polymerization precursor was obtained in the same manner as in Example 30 except that lauroly peroxide (available under the trade name "Perroyl L" manufactured by Nippon Yushi Co., Ltd. with a 10-h half reduction period temperature of 62°C) was used in lieu of benzoyl peroxide as radical polymerization initiator and that correspondingly the polymerization temperature and time were set respectively to 70 to 75°C and 9 h . This graft polymerization precursor had a composition consisting of 29.1 % by weight of styrene polymer, 0.13 % by weight of the active oxygen content in the styrene polymer and 0.3 % by weight of insoluble part in xylene.

### [Comparative Example 32]

A graft polymerization precursor was prepared in the same manner as in Example 30 except that t-butylperoxy benzoate (available under the trade name "Perbutyl Z" manufactured by Nippon Yushi Co., Ltd. with a 10-h half reduction period temperature of 104°C) was used in lieu of benzoyl peroxide as radical polymerization initiator.

This graft copolymerization precursor contained 92 % by weight of insoluble part in xylene. This is thought to be due to the presumable occurrence of inter-molecular bridging caused by the decomposition of t-butylperoxymethacryloyloxyethyl carbonate during the polymerization.

### [Example 35]

A graft polymerization precursor was prepared in the same manner as in Example 30 except that a copolymer consisting of 73 % by weight of ethylene and 28 % by weight of vinyl acetate (available under the trade name "Evaflex 260" manufactured by Mitsui Poly-chemical Co., Ltd.) was used in lieu of the ethylene-vinyl acetate copolymer.

The content of the styrene polymer was obtained from the yield of the graft polymerization precursor. It was 29.7 % by weight.

The active oxygen content in the styrene polymer measured in the same manner as in Example 30 was 0.13 % by weight.

### [Examples 36 to 39]

Graft polymerization precursors were prepared in the same manner as in Example 30 except that the amounts of the ethylene-vinyl acetate copolymer, styrene, benzoyl peroxide and t-butylperoxymethacryloyloxyethyl carbonate were varied as in Table 7.

These graft polymerization precursors were subjected to grafting reactions in the same manner as in Reference Example 13, and the grafting efficiency and insoluble part in xylene contents of the resultant grafted systems were measured. The results are as shown in Table 7.

### [Comparative Examples 33 to 36]

Graft polymerization precursors were prepared in the same manner as in Example 30 except that the amounts of the ethylene-vinyl acetate copolymer, styrene, benzoyl peroxide and t-butylperoxymethacryloyloxyethyl carbonate were varied as in Table 8.

These graft polymerization precursors were subjected to grafting reactions in the same manner as in Reference Example 13. The grafting efficiency and insoluble part in xylene contents of the resultant grafted systems were measured. The results are as shown in Table 8.

### [Comparative Example 37]

A graft polymerization precursor was prepared in the same manner as in Example 30 except that cumylperoxyneodocanoate (available under the trade name "Percumyl ND" manufactured fby Nippon Yushi Co., Ltd. with a 10-h half reduction period temperature of 36.6°C) was used in lieu of benzoyl peroxide as radical polymerization initiator and that correspondingly the impregnation temperature and time were set to 35°C and 2 h and the polymerization temperature to 60°C.

This graft polymerization precursor had its surface covered by a transparent resin. Further, the powdery product, constituted by styrene polymer (the impregnated polymerized graft polymerization precursor ) reached 57 % by weight of the charged amount of styrene.

This graft polymerization precursor was subjected to the grafting reaction in the same manner as in Reference Example 13. The grafting efficiency was 13.8 % by weight.

### [Example 40]

A graft polymerization precursor was prepared in the same manner as in Example 1 except that an ethylene-propylene-diene copolymer rubber (available under the trade name "Mitsui Elastomer K-9720" manufactured by Mitsui Sekiyu Kagaku Kogyo Co., Ltd. with a Mooney viscosiy (ML I + 4,100°C) of 40 and iodization of 22, in the form of pellets) was used in lieu of the low density ethylene polymer and that the agitation of the system was carried out with the autoclave held at 60 to 65°C for 2 h in lieu of 1 h .

This graft polymerization precursor was rendered into a film in the same manner as in Example 1, and the styrene polymer content was calculated. It was 29.2 % by weight.

The graft polymerization precursor was subjected to an extraction in the same manner as in Example 1 to extract the styrene polymer.

The measured active oxygen content was 0.13 % by weight.

The graft polymerization precursor was extracted with xylene in the same manner as in Example 1. The insoluble part in xylene was found.

### [Reference Example 17]

The grafting reaction was caused in the same manner as in Reference Example 1 except that the product obtained in Example 40 was used as graft polymerization precursor.

This graft polymerization precursor was subjected to extraction in a Soxhlet extractor with ethyl acetate to extract any non-grafted styrene polymer. The extracted styrene polymer amount was 5.1 % by weight with respect to the total amount.

Thus, the grafting efficiency of styrene polymer was calculated to be 83 % by weight. In the extraction with xylene, the insoluble part in xylene content was 17.2 % by weight.

The grafting efficiency represents the ratio of the amount of grafted polystyrene to the total amount of polymerized polystyrene.

### [Comparative Example 38]

A graft polymerization precursor was prepared in the same manner as in Example 40 except that t-butylperoxymethacryloyloxyethyl carbonate was not used.

Of this graft polymerization precursor the styrene polymer content, active oxygen content and insoluble part in xylene contents were measured in the same manner as in Example 40. They were respectively 29.0, and 0 % by weight.

Further, this graft polymerization precursor was subjected to the grafting reaction in the same manner as in Reference Example 17. The grafting efficiency was 0.1 % by weight, and there was substantially no grafting capacity.

### [Comparative Example 39]

A graft polymerization precursor was prepared in the same manner as in Example 40 except that dicumyl peroxide was used in lieu of t-butylperoxymethacloyloxyethyl carbonate.

In this case, the styrene polymer content, active oxygen content and insoluble part in xylene contents were respectively 29.4, 0.04 and 0 % by weight.

The active oxygen content of 0.04 % by weight is thought to be due to the fact that dicumyl peroxide extracted with ethyl acetate is dissolved in a solvent based on methanol and ethyl acetate as reprecipitation solvent and distributed in the ethylene-propyrene-diene copolymer rubber in the polymerization.

This graft polymerization precursor was analyzed in the same manner as in Reference Example 17. The grafting efficiency with respect to the ethylene-propylene-diene copolymer and the styrene polymer was 1.6 % by weight. Substantially no grafting reaction due to dicumyl peroxide occurred.

The insoluble part in xylene content was 41.5 % by weight.

### [Example 41]

A graft polymerization precursor was prepared in the same manner as in Example 40 except that 300 g of methyl methacrylate were used in lieu of 300 g of styrene.

The content of methyl methacrylate polymer was measured from the yield of this graft polymerization precursor. It was 28.7 % by weight. The active oxygen content and insoluble part in xylene content were respectively 0.12 and 0.4 % by weight.

### [Reference Example 18]

The graft polymerization precursor obtained in Example 41 was subjected to grafting in the same manner as in Reference Example 17. The grafting efficiency of methyl methacrylate was 68.5 % by weight.

### [Comparative Example 40]

2,500 g of pure water were charged into a stainless steel autoclave with a volume of 5ℓ, and 2.5 g of polyvinyl alcohol were dissolved as suspension agent. To this solution a mixture consisting of 1,000 g of styrene, 5 g of benzoyl peroxide and 20 g of t-butylperoxymethacryloyloxyethyl carbonate was added, and the admixture was subjected to polymerization at 80 to 85°C for 7 h to obtain a peroxy-group-containing styrene copolymer.

5 g of this polymer composition were dissolved in benzene, and then the resultant solution was charged into methanol to remove any peroxide remaining without being polymerized. Substantially the same styrene polymer as obtained in Example 40 was formed, and its active oxygen content was 0.12 % by weight.

Subsequently, 70 parts by weight of the ethylene-propyrene-diene copolymer as used in Example 40 and 30 parts by weight of the peroxy-group-containing styrene copolymer noted above were mixed together, and the resultant mixture was subjected to the grafting reaction in the same manner as in Reference Example 17.

The grafting efficiency of the styrene copolymer was 0.3 % by weight, and the insoluble part in xylene content was 30.5 % by weight. The non-dissolved content was substantially a self-bridged styrene copolymer. In this case, no grafting reaction occurred, and only an inter-molecular bridging of the styrene copolymer occurred.

### [Example 42]

A graft polymerization precursor was prepared in the same manner as in Example 40 except that 300 g of vinyl acetate were used in lieu of 300 g of styrene and 6 g of t-butylperoxyallyl carbonate in lieu of 6 g of t-butylperoymethacryloyloxyethyl carbonate.

The content of the vinyl acetate polymer was measured from the yield of this graft polymerization precursor. It was 29.1 % by weight. Further, this graft polymerization precursor was extracted with methanol at room temperature for 7 days to extract the vinyl acetate polymer. The extracted vinyl acetate polymer was charged into petroleum ether to obtain a vinyl acetate polymer powder. The active oxygen content in this vinyl acetate polymer was 0.13 % by weight, and the insoluble part in xylene content in this graft polymerization precursor was 1.6 % by weight.

### [Reference Example 19]

The grafting reaction was caused in the same manner as in Reference Example 17 except that the product obtained in Example 42 was used as graft polymerization precursor and that methanol was used in lieu of ethyl acetate as extraction solvent when calculating the grafting efficiency. The grafting efficiency was 84.9 % by weight.

### [Example 43]

A graft polymerization precursor was obtained in the same manner as in Example 40 except that 225 g of styrene and 75 g of acrylonitrile were used as vinyl monomer.

The content of the styrene-acrylonitrile copolymer was calculated from the yield of this graft polymerization precursor. It was 29.5 % by weight. The active oxygen content in the styrene-acrylonitrile copolymer as measured in the same manner as in Example 40 was 0.13 % by weight. The insoluble part in xylene content was 0.2 % by weight.

### [Reference Example 20]

A graft reaction was caused in the same manner as in Reference Example 17 except that the product

Example 43 was used as graft polymerization precursor. The grafting efficiency was 77.3 % by weight.

### [Example 44]

A graft polymerization precursor was obtained in the same manner as in Example 40 except that lauroyl peroxide (available under the trade name "Perroyl L" manufactured by Nippon Yushi Co., Ltd. with a 10-h half reduction period temperature of 62°C) was used in lieu of benzoyl peroxide as radical polymerization initiator and that the polymerization temperature and time were respectively set to 70 to 75°C and 9 h . This graft polymerization precursor had a composition consisting of 28.9 % by weight of styrene polymer 0.13 % by weight of active oxygen contained in the styrene polymer and 0 % by weight of insoluble part in xylene.

### [Comparative Example 41]

A graft polymerization precursor was obtained in the same manner as in Example 40 except that t-butylperoxybenzoate (available under the trade name "Perbutyl Z" manufactured by Nippon Yushi Co., Ltd. with a 10-h half reduction period temperature of 104°C) was used in lieu of benzoyl peroxide as radical polymerization initiator and that the polymerization temperature and time were respectively set to 120°C and 6 h .

This graft polymerization precursor contained 95 % by weight of insoluble part in xylene. This is thought to be due to an inter-molecular bridging caused with the decomposition of t-butylperoxymethacryloyloxyethyl carbonate.

### [Example 45]

A graft polymerization precursor was obtained in the same manner as in Example 40 except that an ethylene-propylene copolymer rubber (available under the trade name "Mitsui EPT #0045" manufactured by Mitsui Sekiyu Kagaku Kogyo Co., Ltd. with a Mooney viscosity (ML I-100°C) of 40) was used in lieu of the ethylene-propylene copolymer rubber.

The content of the styrene polymer was calculated from the yield of this graft polymerization precursor. It was 28.9 % by weight. The active oxygen content of the styrene polymer as measured in the same manner as Example 40 was 0.13 % by weight.

### [Examples 46 to 49]

Graft polymerization precursor were prepared in the same manner as in Example 40 except that the amounts of the ethylene-propylene-diene copolymer rubber, styrene, benzoyl peroxide and t-butylperoxymethacryloyloxyethyl carbonate were varied as in Table 9. These graft polymerization precursors were subjected to grafting reactions in the same manner as in Reference Example 17, and the grafting efficiency and insoluble part in xylene content of the resultant grafted systems were measured. The results are as shown in Table 9.

### [Comparative Example 42 to 45]

A graft polymerization precursor was obtained in the same manner as in Example 40 except that the amounts of ethylene-propylene-diene copolymer rubber, styrene, benzoyl peroxide and t-butylperoxymethacryloyloxyethyl carbonate were varied as in Table 10. These graft polymerization precursor were subjected to grafting reactions in the same manner as in Reference Example 16. The grafting efficiency and insoluble part in xylene content of the resultant grafted systems were measured. The results are as shown in Table 10.

### [Comparative Example 46]

A graft polymerization precursor was obtained in the same manner as in Example 40 except that cumylperoxyneodecanoate (available under the trade name "Percumyl ND" manufactured by Nippon Yushi with a 10-h half reduction period temperature of 36.36°C) was used in lieu of benzoyl peroxide as radical polymerization initiator and that correspondingly the impregnation temperature and time were respectively set to 35°C and 2 h and the polymerization temperature to 60°C. This graft polymerization precursor had its surface covered by a transparent resin. Further, the powdery product which was constituted of a sole styrene polymer (the impregnated polymerized graft polymerization precursor being in the form of pellets) reached 69 % by weight of the charged amount of styrene.

This graft polymerization precursor was subjected to the grafting reaction in the same manner as in Reference Example 16. The grafting efficiency was 16.1 % by weight.

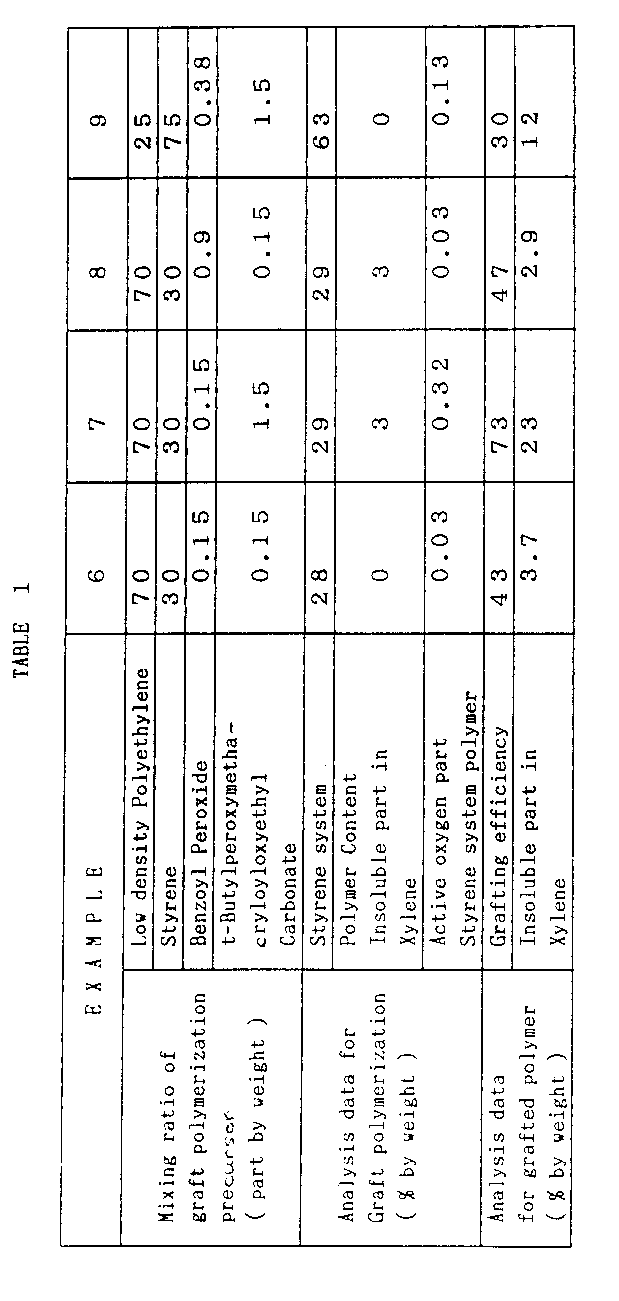

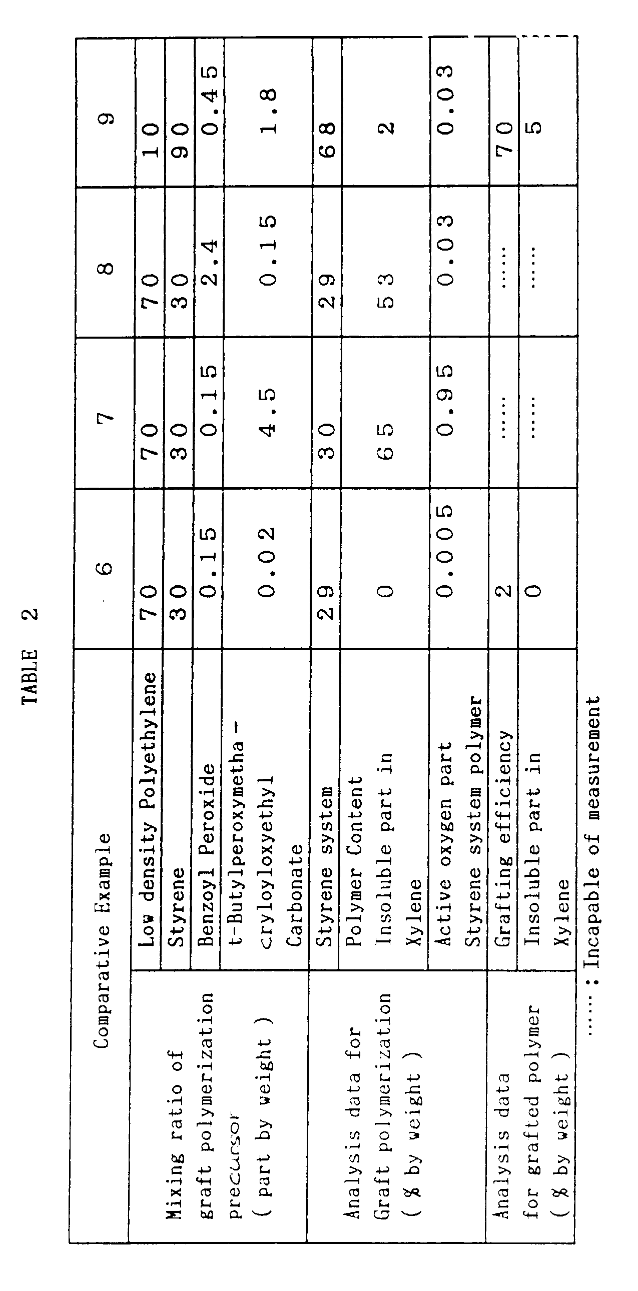

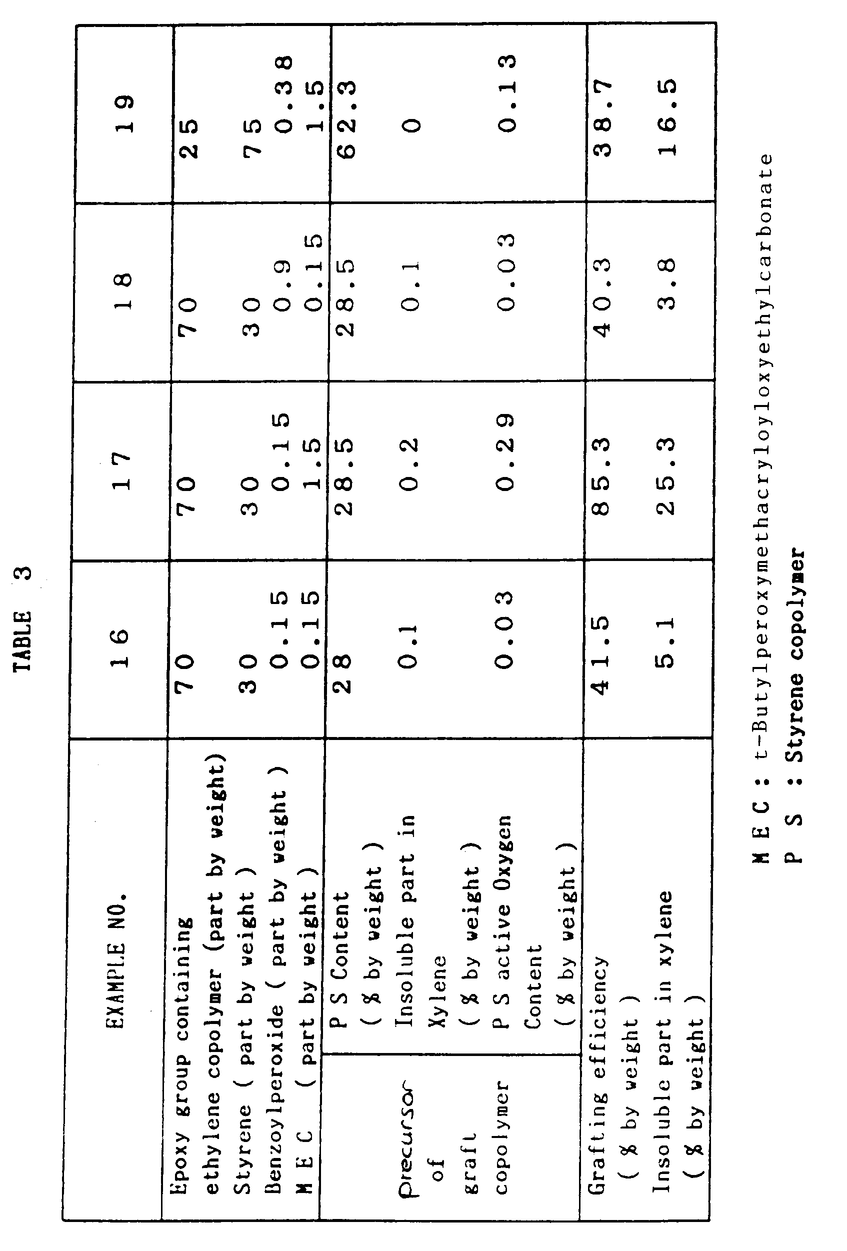

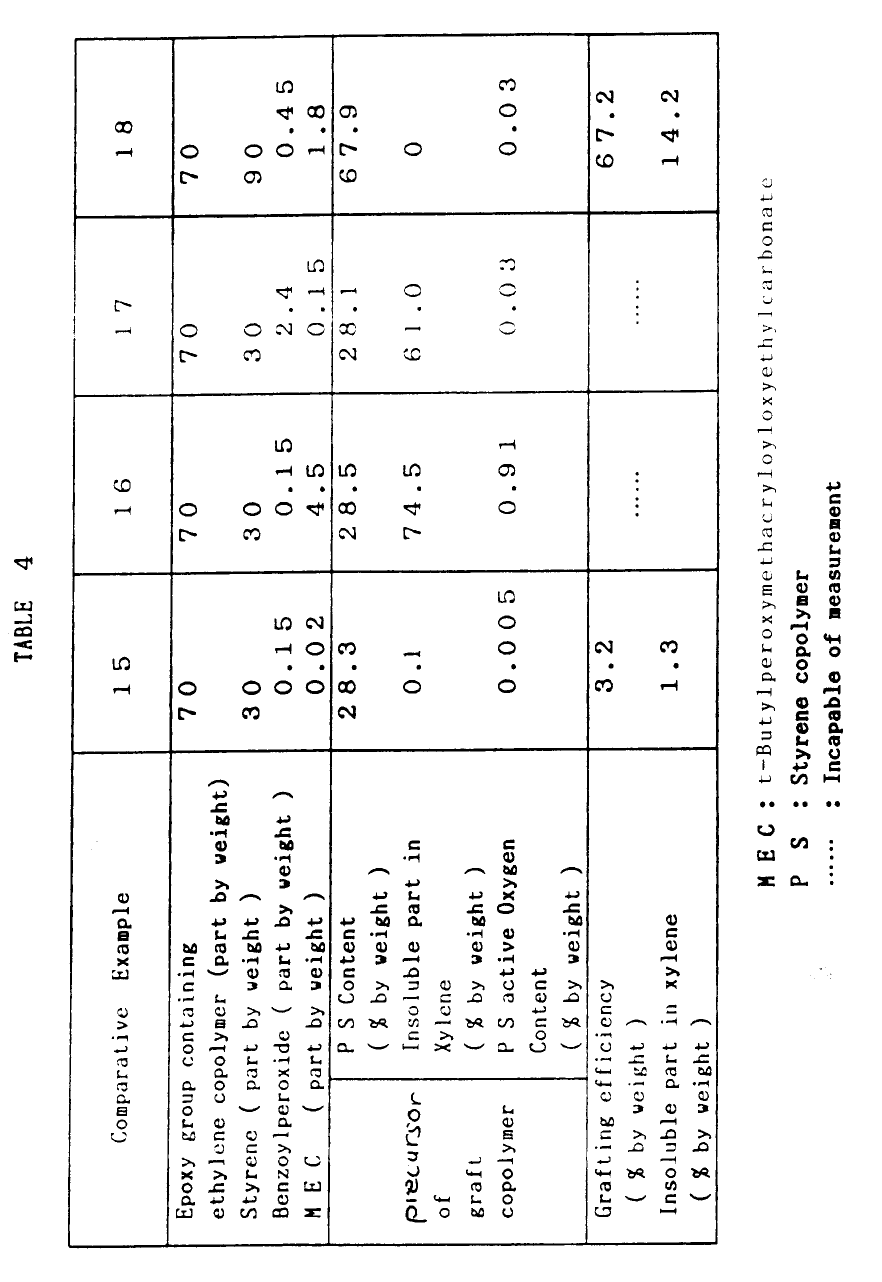

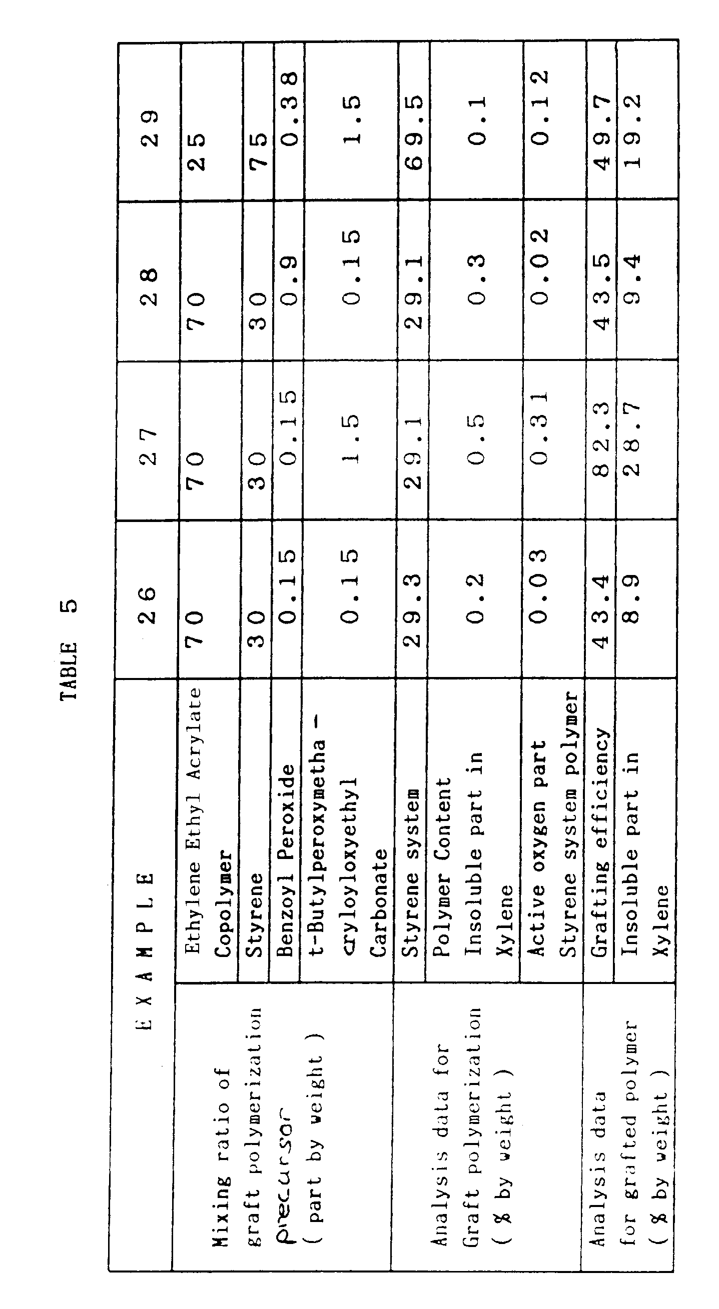

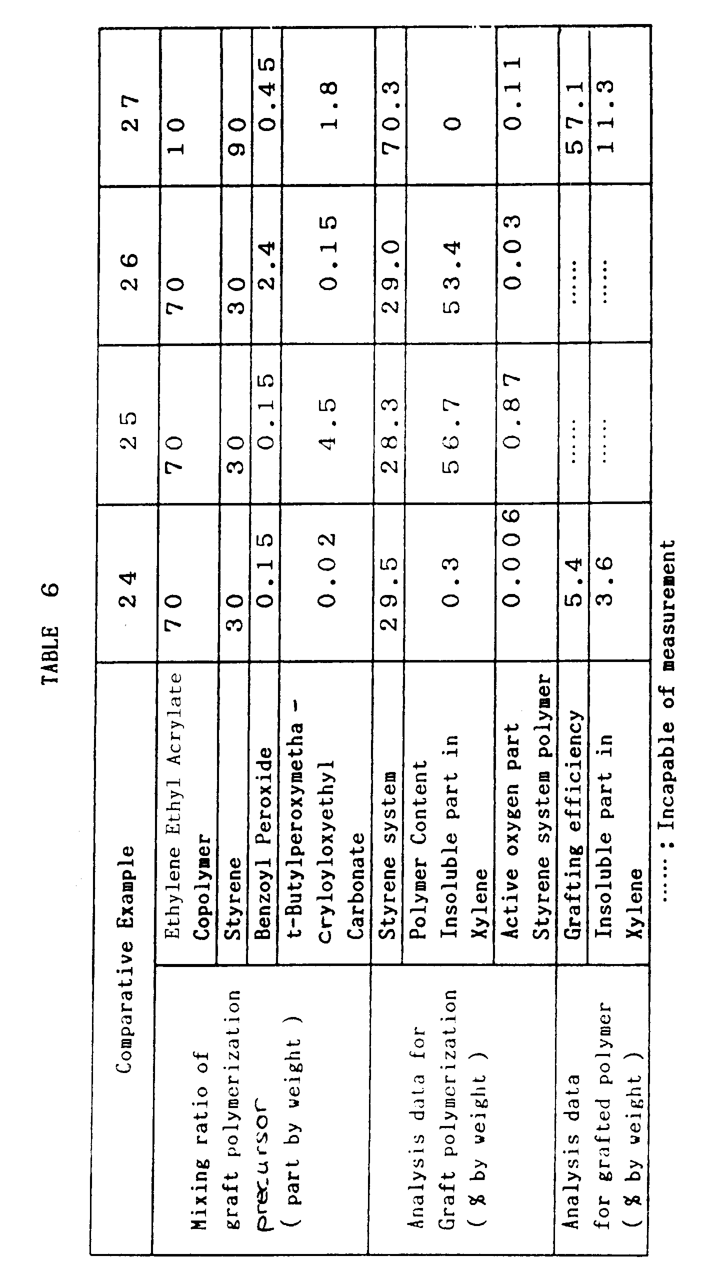

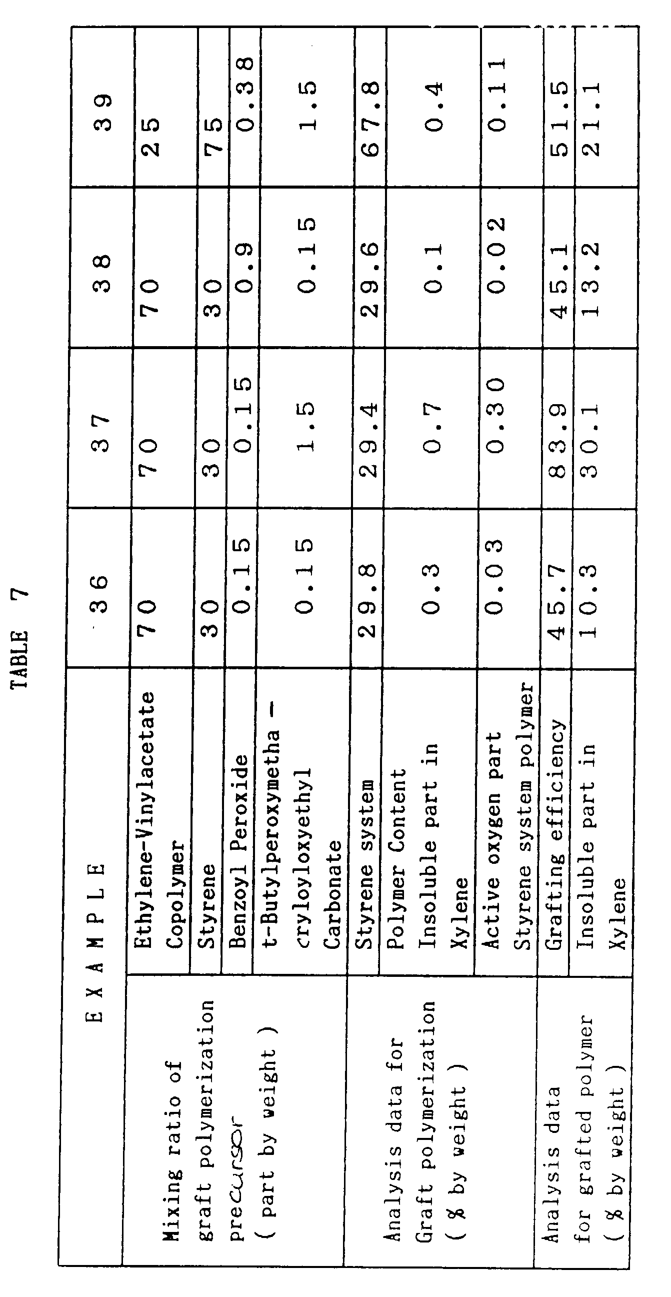

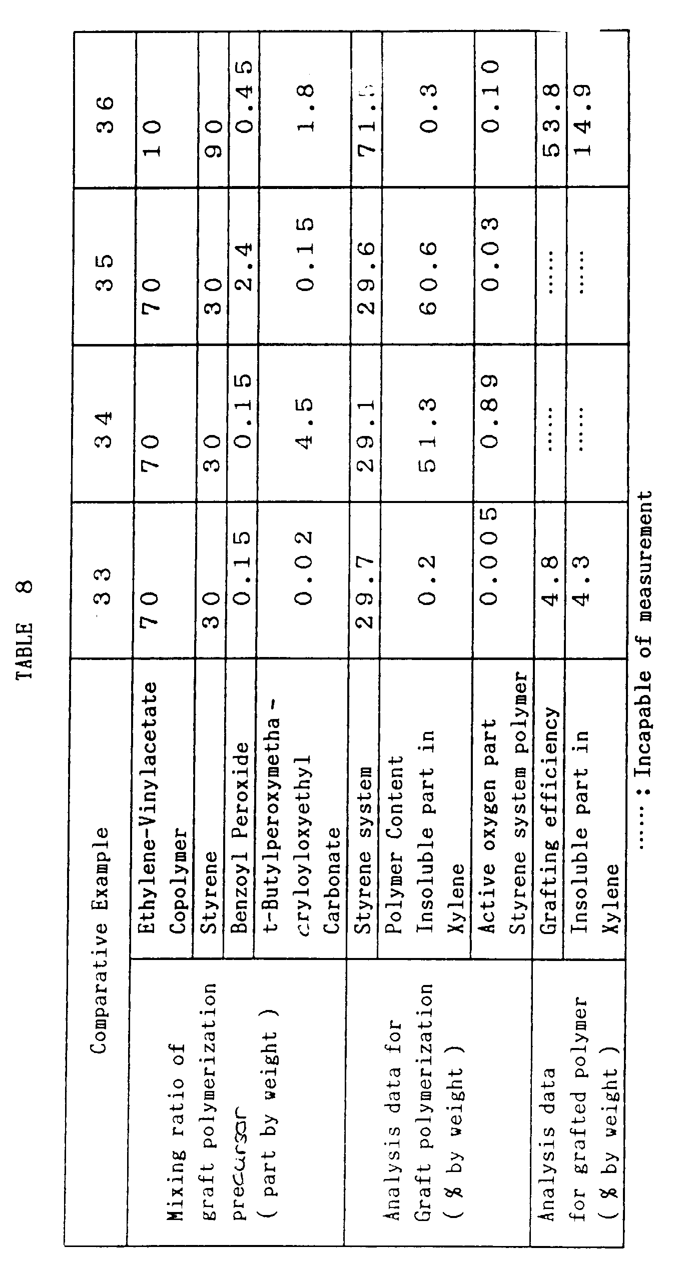

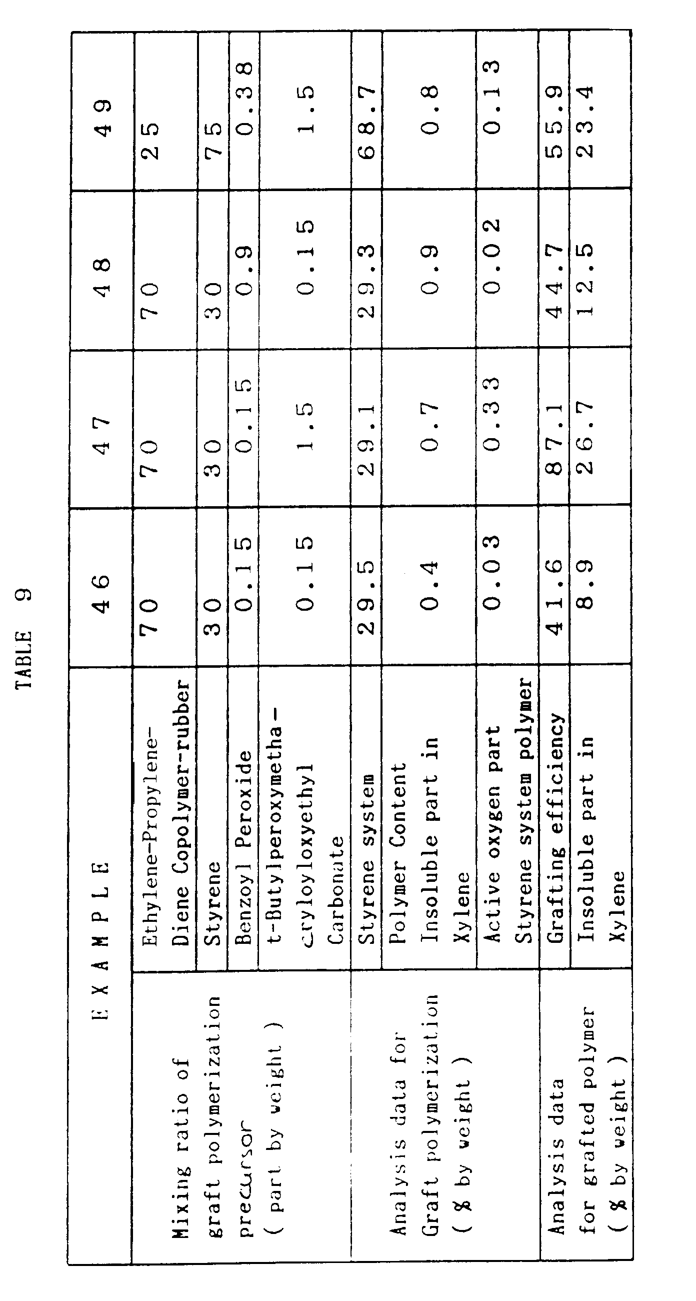

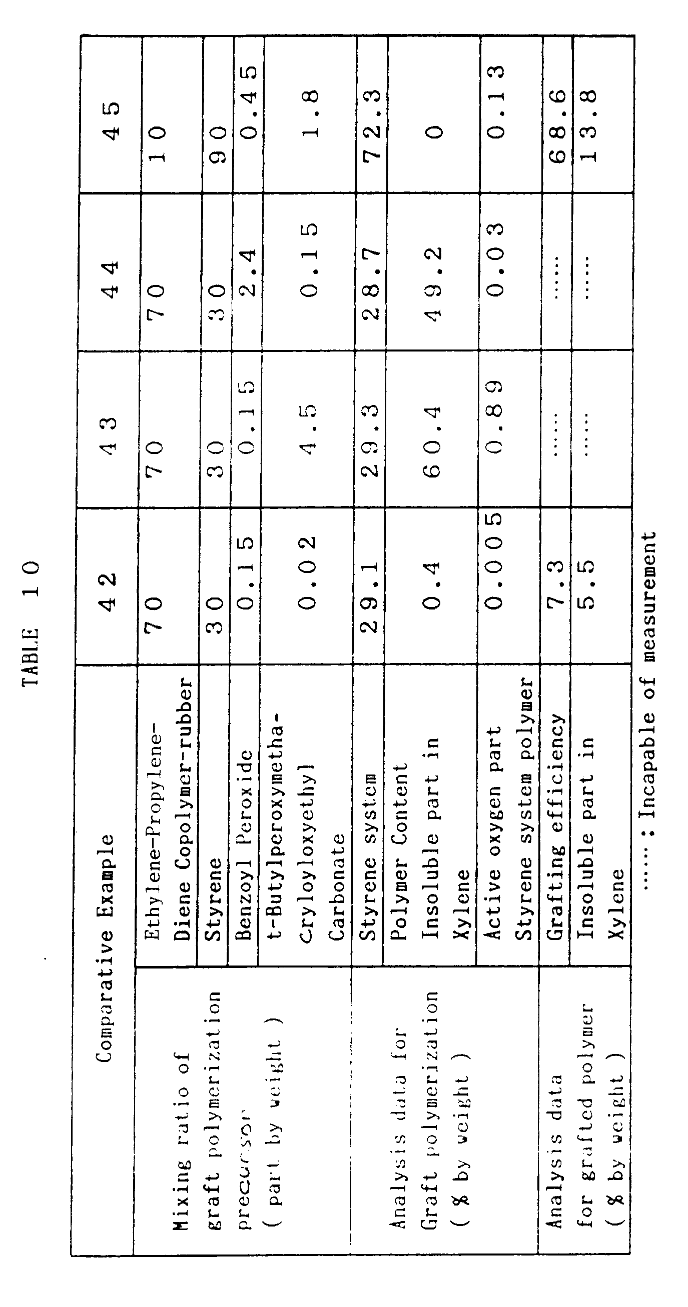

## Claims

1. A graft polymerization precursor obtainable by copolymerizing, in the presence of (D) a radical polymerization initiator having a decomposition temperature of 40 to 90°C for obtaining a half reduction period of 10 hours.
in
(A) 100 parts by weight of ethylene homopolymer or copolymer or mixtures thereof
(B) 5 to 400 parts by weight of one or more vinyl monomers selected from the group consisting of vinyl aromatic monomers, acrylic or methacrylic ester monomers or mixtures thereof, acrylonitrile or methacrylonitrile or mixtures thereof, and vinyl ester monomers and
(C) one or more radical polymerizable organic peroxides represented by general formula (I) 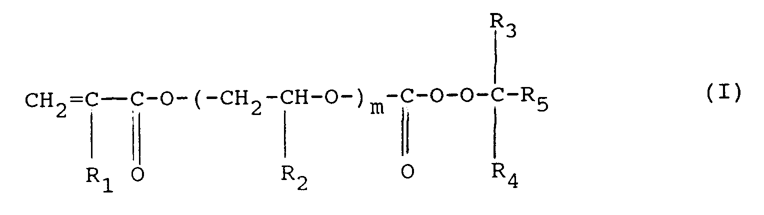 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2,
or represented by general formula (II) 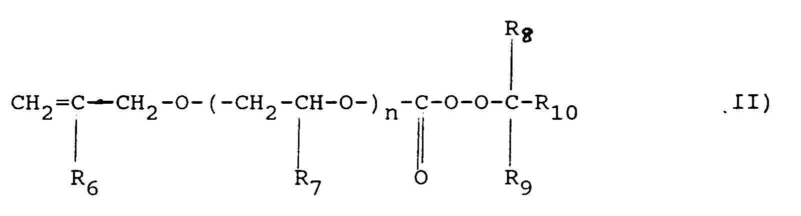 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group or a C₃₋₁₂ cycloalkyl group, and n is 0, 1 or 2,
said component (C) being incorporated in a proportion of 0.1 to 10 parts by weight with respect to 100 parts by weight of said vinyl monomer or monomers (B), said component (D) constituting 0.01 to 5 parts by weight of the sum of said vinyl monomers (B) and said radical polymerizable organic peroxide (C) and said graft polymerization precursor containing 20 to 95% by weight of the ethylene polymer (A) and 80 to 5% by weight of vinyl peroxide copolymer containing 0.01 to 0.73% by weight of active oxygen.

2. The graft polymerization precursor according to claim 1, wherein said ethylene polymer is a low density ethylene polymer with a density of 0.910 to 0.935 g/cm³.

3. The graft polymerization precursor according to claim 1, wherein said ethylene polymer is an epoxy-group containing ethylene copolymer obtained through copolymerization of ethylene and acrylic or methacrylic glycidyl ester or mixtures thereof.

4. The graft polymerization precursor according to claim 1, wherein said ethylene polymer is an ethylene copolymer consisting of ethylene and acrylic or methacrylic ester or mixtures thereof.

5. The graft polymerization precursor according to claim 1, wherein said ethylene polymer is an ethylene copolymer consisting of ethylene and vinyl ester.

6. The graft polymerization precursor according to claim 1, wherein said ethylene polymer is an ethylene-propylene copolymer rubber.

7. The graft polymerization precursor according to claim 1, wherein said ethylene polymer is an ethylene-propylene-diene copolymer rubber.

8. The graft polymerization precursor according to claim 1, wherein 50 or more % by weight of vinyl monomers polymerized in said ethylene polymer consist of vinyl aromatic monomers.

9. The graft polymerization precursor according to claim 1, wherein 50 or more % by weight of vinyl monomers polymerized in said ethylene polymer consist of acrylic ester monomers.

10. The graft polymerization precursor according to claim 3, wherein said epoxy-group-containing ethylene copolymer is obtained through the copolymerization of 60 to 99.5% by weight of ethylene and 0.5 to 40% by weight of acrylic or methacrylic glycidyl ester or mixtures thereof.

11. The graft polymerization precursor according to claim 4, wherein said ethylene polymer is an ethylene copolymer consisting of 50 to 99% by weight of ethylene and 50 to 1% by weight of acrylic or methacrylic ester or mixtures thereof.

12. The graft polymerization precursor according to claim 5, wherein said vinyl ester is vinyl acetate.

13. The graft polymerization precursor according to claim 5, wherein said ethylene polymer consists of 50 to 99% by weight of ethylene and 50 to 1% by weight of vinyl ester.

14. A method of manufacturing a graft polymerization precursor according to claim 1 comprising the steps of
suspending 100 parts by weight of ethylene homopolymer, copolymer or mixtures thereof (A) in water,
adding to the resultant suspension a solution obtained by dissolving in 5 to 400 parts by weight of one or more vinyl monomers (B) selected from a group consisting of vinyl aromatic monomers, acrylic or methacrylic ester monomers, and mixtures thereof, acrylonitrile or methacrylonitrile and mixtures thereof, and vinyl ester monomers, from 0.1 to 10 parts by weight with respect to 100 parts by weight of said vinyl monomers (B) of one or more radical polymerizable organic peroxides (C) represented by general formula (I) 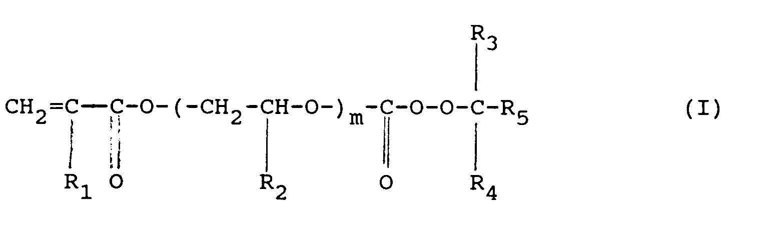 wherein R₁ represents a hydrogen atom or a C₁₋₂ alkyl group, R₂ represents a hydrogen atom or a methyl group, R₃ and R₄ represent C₁₋₄ alkyl groups, R₅ represents an alkyl, phenyl or alkyl-substituted phenyl group containing 1 to 12 carbon atoms or a C₃₋₁₂ cycloalkyl group, and m is 1 or 2,
or represented by general formula (II) 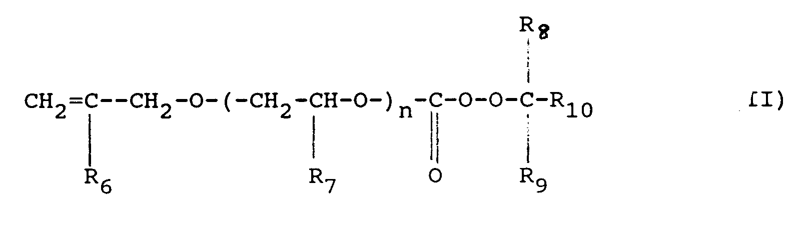 wherein R₆ represents a hydrogen atom or a C₁₋₄ alkyl group, R₇ represents a hydrogen atom or a methyl group, R₈ and R₉ represent C₁₋₄ alkyl groups, R₁₀ represents an alkyl, phenyl or alkyl-substituted phenyl group or a C₃₋₁₂ cycloalkyl group,and n is 0, 1 or 2,
and a radical polymerization initiator (D) with a decompostion temperature of 40 to 90°C for obtaining a half reduction period of 10 hours such that it constitutes 0.01 to 5 parts by weight per 100 parts by weight of the sum of said vinyl monomers (B) and said radical polymerizable organic peroxide (C),
heating the resultant mixture to less than the decomposition temperature of said initiator (D) until said ethylene polymer (A) is impregnated with at least 50% by weight of said vinyl monomers (B), radical polymerizable organic peroxide (C) and radical polymerization initiator (D), and
elevating the temperature of the thus obtained aqueous suspension to cause copolymerization of said vinyl monomers (B) and said radical polymerizable organic peroxide (C) in said ethylene polymer (A).

15. The method of claim 14, wherein said ethylene polymer is a low density ethylene polymer with a density of 0.910 to 0.935 g/cm³.

16. The method of claim 14 wherein said ethylene polymer is an epoxy-containing ethylene polymer obtained through copolymerization of ethylene and glycidyl acrylate or glycidyl methacrylate or mixtures thereof.

17. The method of claim 14, wherein said ethylene polymer is obtained from ethylene and a vinyl ester.

18. The method of claim 14 wherein said ethylene polymer is an ethylene-propylene copolymer rubber.

19. The method of claim 14 wherein said ethylene polymer is obtained from ethylene and an acrylic ester or methacrylic ester or mixtures thereof.

20. The method of claim 14 wherein said ethylene polymer is an ethylene-propylene-diene copolymer rubber.

21. The method of claim 14, wherein at least 50% by weight of said vinyl monomers consist of vinyl aromatic monomers.

22. The method of claim 14, wherein at least 50% by weight of said vinyl monomers consist of acrylic or methacrylic ester monomers or mixtures thereof.

23. The method of claim 16 wherein said epoxy-group-containing ethylene polymer is obtained through copolymerization of 60 to 99.5% of ethylene and 0.5 to 40% by weight of glycidyl acrylate, glycidyl methacrylate or mixtures thereof.

24. The method of claim 17 wherein said vinyl ester is vinyl acetate.

25. The method of claim 17 wherein said ethylene polymer is obtained from 50 to 99% of ethylene and 50 to 1% by weight of a vinyl ester.

26. The method of claim 19, wherein said ethylene polymer consists of 50 to 99% by weight of ethylene and 50 to 1% by weight of an acrylic ester or methacrylic ester or mixtures thereof.

## Patentansprüche

1. Pfropfpolymerisationsvorläufer, erhältlich durch Copolymerisieren
von
(B) 5 bis 400 Gewichtsteilen eines oder mehrerer Vinylmonomere, ausgewählt aus der Gruppe, bestehend aus aromatischen Vinylmonomeren, Acryl- oder Methacrylestermonomeren oder Gemischen daraus, Acrylnitril oder Methacrylnitril oder Gemischen daraus und Vinylestermonomeren, und
(C) einem oder mehreren radikalpolymerisierbaren organischen Peroxiden, dargestellt durch die allgemeine Formel (I) 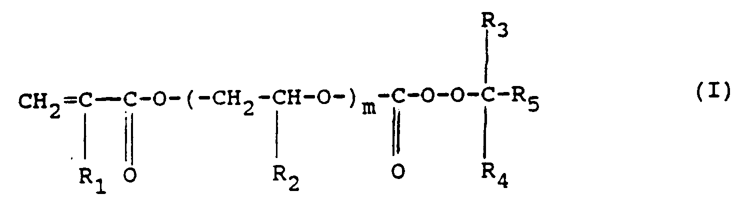
worin R₁ ein Wasserstoffatom oder eine C₁₋₂-Alkylgruppe darstellt, R₂ ein Wasserstoffatom oder eine Methylgruppe darstellt, R₃ und R₄ C₁₋₄-Alkylgruppen darstellen, R₅ eine Alkyl-, Phenyl- oder alkylsubstituierte Phenylgruppe, enthaltend 1 bis 12 Kohlenstoffatome, oder eine C₃₋₁₂-Cycloalkylgruppe darstellt, und m 1 oder 2 ist
oder dargestellt durch die allgemeine Formel (II) 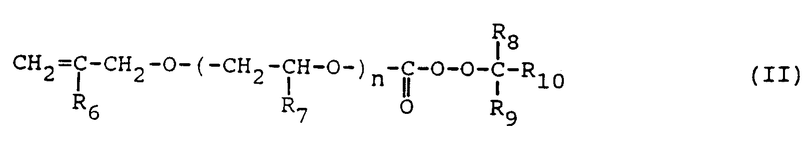 worin R₆ ein Wasserstoffatom oder eine C₁₋₄-Alkylgruppe darstellt, R₇ ein Wasserstoffatom oder eine Methylgruppe darstellt, R₈ und R₉ C₁₋₄-Alkylgruppen darstellen, R₁₀ eine Alkyl-, Phenyl- oder alkylsubstituierte Phenylgruppe oder eine C₃₋₁₂-Cycloalkylgruppe darstellt, und n 0, 1 oder 2 ist.
in
(A) 100 Gewichtsteilen Ethylenhomopolymer oder -copolymer oder Gemischen daraus
in Anwesenheit von (D) einem Radikalpolymerisationsinitiator mit einer Zersetzungstemperatur von 40°C bis 90°C, um eine Halbreduktionsperiode von 10 h zu erhalten,
wobei der Bestandteil (C) in einem Verhältnis von 0,1 bis 10 Gewichtsteilen, bezogen auf 100 Gewichtsteile des Vinylmonomers oder -monomere (B), inkorporiert wird, der Bestandteil (D) 0,01 bis 5 Gewichtsteile der Summe der Vinylmonomere (B) und des radikalpolymerisierbaren organischen Peroxids (C) ausmacht, und der Pfropfpolymerisationsvorläufer 20 bis 95 Gew.-% des Ethylenpolymers (A) und 80 bis 5 Gew.-% Vinylperoxidcopolymer, enthaltend 0,01 bis 0,73 Gew.-% aktiven Sauerstoff, enthält.

2. Pfropfpolymerisationsvorläufer nach Anspruch 1, wobei das Ethylenpolymer ein Ethylenpolymer niedriger Dichte mit einer Dichte von 0,910 bis 0,935 g/cm³ ist.

3. Pfropfpolymerisationsvorläufer nach Anspruch 1, wobei das Ethylenpolymer ein eine Epoxygruppe enthaltendes Copolymer, erhalten durch Copolymersation von Ethylen und Acryl- oder Methacrylglycidylester oder Gemischen daraus, ist.

4. Pfropfpolymerisationsvorläufer nach Anspruch 1, wobei das Ethylenpolymer ein Ethylencopolymer, bestehend aus Ethylen und Acryl- oder Methacrylester oder Gemischen daraus, ist.

5. Pfropfpolymerisationsvorläufer nach Anspruch 1, wobei das Ethylenpolymer ein Ethylencopolymer, bestehend aus Ethylen und Vinylester, ist.

6. Pfropfpolymerisationsvorläufer nach Anspruch 1, wobei das Ethylenpolymer ein Ethylen-Propylen-Copolymergummi ist.

7. Pfropfpolymerisationsvorläufer nach Anspruch 1, wobei das Ethylenpolymer ein Ethylen-Propylen-Dien-Copolymergummi ist.

8. Pfropfpolymerisationsvorläufer nach Anspruch 1, wobei 50 oder mehr Gew.-% der in dem Ethylenpolymer polymerisierten Vinylmonomere aus aromatischen Vinylmonomeren bestehen.

9. Pfropfpolymerisationsvorläufer nach Anspruch 1, wobei 50 oder mehr Gew.-% der in dem Ethylenpolymer polymerisierten Vinylmonomere aus Acrylestermonomeren bestehen.

10. Pfropfpolymerisationsvorläufer nach Anspruch 3, wobei das epoxygruppenhaltige Ethylencopolymer erhalten wird durch Copolymerisation von 60 bis 99,5 Gew.-% Ethylen und 0,5 bis 40 Gew.-% Acryl- oder Methacrylglycidylester oder Gemischen daraus.

11. Pfropfpolymerisationsvorläufer nach Anspruch 4, wobei das Ethylenpolymer ein Ethylencopolymer, bestehend aus 50 bis 99 Gew.-% Ethylen und 50 bis 1 Gew.-% Acryl- oder Methacrylester oder Gemischen daraus, ist.

12. Pfropfpolymerisationsvorläufer nach Anspruch 5, wobei der Vinylester Vinylacetat ist.

13. Pfropfpolymerisationsvorläufer nach Anspruch 5, wobei das Ethylenpolymer aus 50 bis 99 Gew.-% Ethylen und 50 bis 1 Gew.-% Vinylester besteht.

14. Verfahren zum Herstellen eines Pfropfpolymerisationsvorläufers nach Anspruch 1, umfassend die folgenden Stufen:
Suspendieren von 100 Gewichtsteilen Ethylenhomopolymer, -copolymer oder Gemischen daraus (A) in Wasser,
Zufügen zu der erhaltenen Suspension einer Lösung, erhalten durch Auflösen von 5 bis 400 Gewichtsteilen eines oder mehrerer Vinylmonomere (B), ausgewählt aus der Gruppe, bestehend aus aromatischen Vinylmonomeren, Acryl- oder Methacrylestermonomeren und Gemischen daraus, Acrylnitril oder Methacrylnitril und Gemischen daraus und Vinylestermonomeren, 0,1 bis 10 Gewichtsteilen, bezogen auf 100 Gewichtsteile der Vinylmonomere (B), eines oder mehrerer radikalpolymerisierbaren organischen Peroxide (C), dargestellt durch die allgemeine Formel (I) 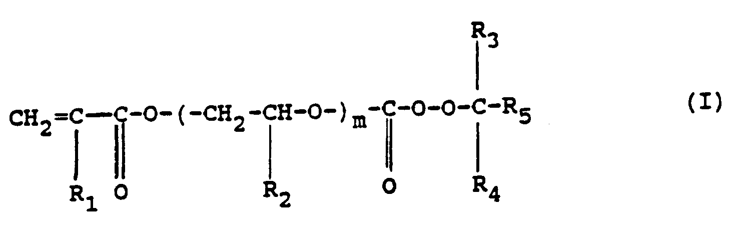 worin R₁ ein Wasserstoffatom oder eine C₁₋₂-Alkylgruppe darstellt, R₂ ein Wasserstoffatom oder eine Methylgruppe darstellt, R₃ und R₄ C₁₋₄-Alkylgruppen darstellen, R₅ eine Alkyl-, Phenyl- oder alkylsubstituierte Phenylgruppe, enthaltend 1 bis 12 Kohlenstoffatome, oder eine C₃₋₁₂-Cycloalkylgruppe darstellt, und m 1 oder 2 ist,
oder dargestellt durch die allgemeine Formel (II) 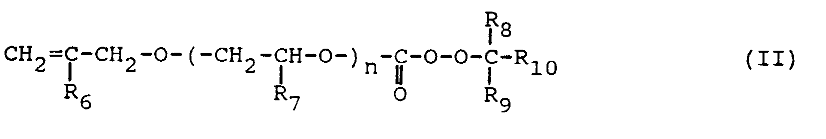 worin R₆ ein Wasserstoffatom oder eine C₁₋₄-Alkylgruppe darstellt, R₇ ein Wasserstoffatom oder eine Methylgruppe darstellt, R₈ und R₉ C₁₋₄-Alkylgruppen darstellen, R₁₀ eine Alkyl-, Phenyl- oder alkylsubstituierte Phenylgruppe oder eine C₃₋₁₂-Cycloalkylgruppe darstellt, und n 0, 1 oder 2 ist;
und eines Radikalpolymerisationsinitiators (D) mit einer Zersetzungstemperatur von 40°C bis 90°C, um eine Halbreduktionsperiode von 10 h zu erhalten, so daß er 0,01 bis 5 Gewichtsteile pro 100 Gewichtsteile der Summe der Vinylmonomere (B) und des radikalpolymerisierbaren organischen Peroxids (C) ausmacht,
Erwärmen des erhaltenen Gemisches auf weniger als die Zersetzungstemperatur des Initiators (D) bis das Ethylenpolymer (A) mit mindestens 50 Gew.-% der Vinylmonomere (B), dem radikalpolymerisierbaren organischen Peroxid (C) und dem Radikalpolymerisationsinitiator (D) imprägniert ist, und
Erhöhen der Temperatur der so erhaltenen wäßrigen Suspension, um eine Copolymerisation der Vinylmonomere (B) und des radikalpolymerisierbaren organischen Peroxids (C) in dem Ethylenpolymer (A) zu verursachen.

15. Verfahren nach Anspruch 14, wobei das Ethylenpolymer ein Ethylenpolymer niedriger Dichte mit einer Dichte von 0,910 bis 0,935 g/cm³ ist.

16. Verfahren nach Anspruch 14, wobei das Ethylenpolymer ein epoxyhaltiges Ethylenpolymer, erhalten durch Copolymerisation von Ethylen und Glycidylacrylat oder Glycidylmethacrylat oder Gemischen daraus, ist.

17. Verfahren nach Anspruch 14, wobei das Ethylenpolymer aus Ethylen und einem Vinylester erhalten wird.

18. Verfahren nach Anspruch 14, wobei das Ethylenpolymer ein Ethylen-Propylen-Copolymergummi ist.

19. Verfahren nach Anspruch 14, wobei das Ethylenpolymer aus Ethylen und einem Acrylester oder Methacrylester oder Gemischen daraus erhalten wird.

20. Verfahren nach Anspruch 14, wobei das Ethylenpolymer ein Ethylen-Propylen-Dien-Copolymergummi ist.

21. Verfahren nach Anspruch 14, wobei mindestens 50 Gew.-% der Vinylmonomere aus aromatischen Vinylmonomeren bestehen.

22. Verfahren nach Anspruch 14, wobei mindestens 50 Gew.-% der Vinylmonomere aus Acryl- oder Methacrylestermonomeren oder Gemischen daraus bestehen.

23. Verfahren nach Anspruch 16, wobei das epoxygruppenhaltige Ethylenpolymer durch Copolymerisation von 60% bis 99,5% Ethylen und 0,5 bis 40 Gew.-% Glycidylacrylat, Glycidylmethacrylat oder Gemischen daraus erhalten wird.

24. Verfahren nach Anspruch 17, wobei der Vinylester Vinylacetat ist.

25. Verfahren nach Anspruch 17, wobei das Ethylenpolymer aus 50 bis 99% Ethylen und 50 bis 1 Gew.-% eines Vinylesters erhalten wird.

26. Verfahren nach Anspruch 19, wobei das Ethylenpolymer aus 50 bis 99 Gew.-% Ethylen und 50 bis 1 Gew.-% eines Acrylesters oder Methacrylesters oder Gemischen daraus besteht.

## Revendications

1. Précurseur de polymérisation greffage pouvant être obtenu en copolymérisant, en présence de (D) un agent d'amorçage de la polymérisation radicalaire ayant une température de décomposition comprise entre 40 et 90°C pour obtenir une période de demi-réduction de 10 heures dans
(A) 100 parties en poids d'un homopolymère ou d'un copolymère d'éthylène ou des mélanges de ceux-ci,
(B) 5 à 400 parties en poids d'un ou plusieurs monomères vinyliques choisis dans le groupe comprenant des monomères vinyliques aromatiques, des esters acryliques ou méthacryliques monomères ou des mélanges de ceux-ci, l'acrylonitrile ou le méthacrylonitrile ou des mélanges de ceux-ci, et des esters vinyliques monomères, et
(C) un ou plusieurs peroxydes organiques polymérisables par voie radicalaire répondant à la formule générale (I) 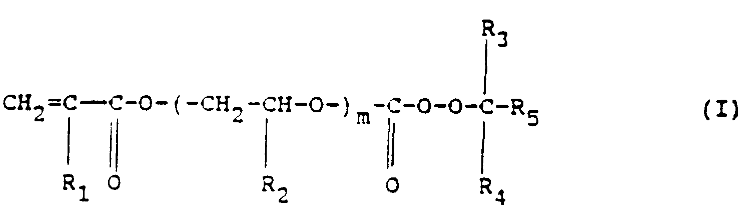 dans laquelle R₁ représente un atome d'hydrogène, ou un groupe alkyle en C₁-C₂, R₂ représente un atome d'hydrogène ou un groupe méthyle, R₃ et R₄ représentent des groupes alkyle en C₁-C₄, R₅ représente un groupe alkyle, phényle ou phényle alkyl-substitué contenant 1 à 12 atomes de carbone ou un groupe cycloalkyle en C₃-C₁₂, et m est 1 ou 2,
ou répondant à la formule générale (II) 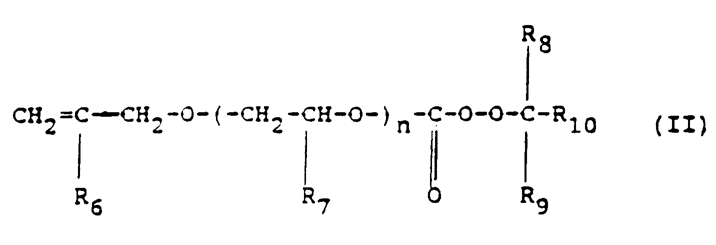 dans laquelle R₆ représente un atome d'hydrogène ou un groupe alkyle en C₁-C₄, R₇ représente un atome d'hydrogène ou un groupe méthyle, R₈ et R₉ représente des groupes alkyle en C₁-C₄, R₁₀ représente un groupe alkyle, phényle ou phényle alkyl-substitué ou un groupe cycloalkyle en C₃-C₁₂ et n est 0, 1 ou 2,
ledit constituant (C) étant incorporé dans une proportion de 0,1 à 10 parties en poids pour 100 parties en poids de ce ou ces monomères vinyliques (B), ledit constituant (D) représentant 0,01 à 5 parties en poids de la somme de desdits monomères vinyliques (B) et dudit peroxyde organique polymérisable par voie radicalaire (C), et ledit précurseur de polymérisation greffage contenant 20 à 95 % en poids du polymère de l'éthylène (A) et 80 à 5 % en poids de copolymère de peroxyde vinylique contenant 0,01 à 0,73 % en poids d'oxygène actif.

2. Précurseur de polymérisation greffage selon la revendication 1, dans lequel ledit polymère d'éthylène est un polymère d'éthylène basse densité ayant une densité de 0,910 à 0,935 g/cm³.

3. Précurseur de polymérisation greffage selon la revendication 1, dans lequel ledit polymère d'éthylène est un copolymère d'éthylène contenant des groupes époxy obtenu par copolymérisation de l'éthylène et d'un ester glycidylique acrylique ou méthacrylique ou des mélanges de ceux-ci.

4. Précurseur de polymérisation greffage selon la revendication 1, dans lequel ledit polymère d'éthylène est un copolymère d'éthylène constitué d'éthylène et d'un ester acrylique ou méthacrylique ou de mélanges de ceux-ci.

5. Précurseur de polymérisation greffage selon la revendication 1, dans lequel ledit polymère d'éthylène est un copolymère d'éthylène constitué d'éthylène et d'un ester vinylique.

6. Précurseur de polymérisation greffage selon la revendication 1, dans lequel ledit polymère d'éthylène est un caoutchouc de copolymère éthylène-propylène.

7. Précurseur de polymérisation greffage selon la revendication 1, dans lequel ledit polymère d'éthylène est un caoutchouc de copolymère éthylène-propylène-diène.

8. Précurseur de polymérisation greffage selon la revendication 1, dans lequel 50 % en poids ou davantage des monomères vinyliques polymérisés dans ledit polymère d'éthylène sont constitués de monomères vinyliques aromatiques.

9. Précurseur de polymérisation greffage selon la revendication 1, dans lequel 50 % en poids ou davantage des monomères vinyliques polymérisés dans ledit polymère d'éthylène sont constitués d'esters acryliques monomères.

10. Précurseur de polymérisation greffage selon la revendication 3, dans lequel ledit copolymère d'éthylène contenant des groupes époxy est obtenu par copolymérisation de 60 à 99,5 % en poids d'éthylène et de 0,5 à 40 % en poids d'un ester glycidylique acrylique ou méthacrylique ou de mélanges de ceux-ci.

11. Précurseur de polymérisation greffage selon la revendication 4, dans lequel ledit polymère d'éthylène est un copolymère d'éthylène constitué de 50 à 99 % en poids d'éthylène et de 50 à 1 % en poids d'un ester acrylique ou méthacrylique ou de mélanges de ceux-ci.

12. Précurseur de polymérisation greffage selon la revendication 5, dans lequel ledit ester vinylique est l'acétate de vinyle.

13. Précurseur de polymérisation greffage selon la revendication 5, dans lequel ledit polymère d'éthylène est constitué de 50 à 99 % en poids d'éthylène et de 50 à 1 % en poids d'ester vinylique.

14. Procédé de fabrication d'un précurseur de polymérisation greffage selon la revendication 1, comprenant les étapes consistant à
mettre en suspension 100 parties en poids d'un homopolymère, d'un copolymère de l'éthylène ou de mélanges de ceux-ci (A) dans de l'eau,
ajouter à la suspension obtenue une solution obtenue en dissolvant dans 5 à 400 parties en poids d'un ou plusieurs monomères vinyliques (B) choisis dans le groupe comprenant les monomères vinyliques aromatiques, les esters acryliques ou méthacryliques monomères et des mélanges de ceux-ci, l'acrylonitrile ou le méthacrylonitrile ou des mélanges de ceux-ci, et des esters vinyliques monomères, de 0,1 à 10 parties en poids pour 100 parties en poids de ces monomères vinyliques (B) d'un ou plusieurs peroxydes organiques polymérisables par voie radicalaire (C) répondant à la formule générale (I) 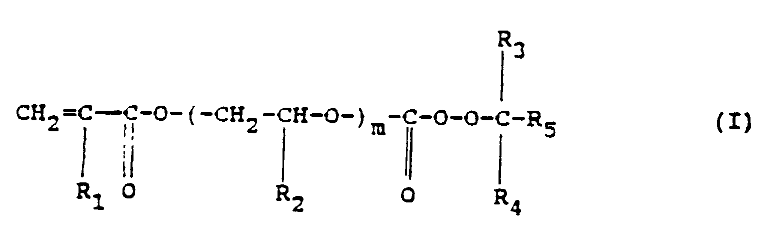 dans laquelle R₁ représente un atome d'hydrogène ou un groupe alkyle en C₁-C₂, R₂ représente un atome d'hydrogène ou un groupe méthyle, R₃ et R₄ représentent des groupes alkyle en C₁-C₄, R₅ représente un groupe alkyle, phényle ou phényle alkyl-substitué contenant 1 à 12 atomes de carbone ou un groupe cycloalkyle en C₃-C₁₂, et m est 1 ou 2,
ou répondant à la formule générale (II) 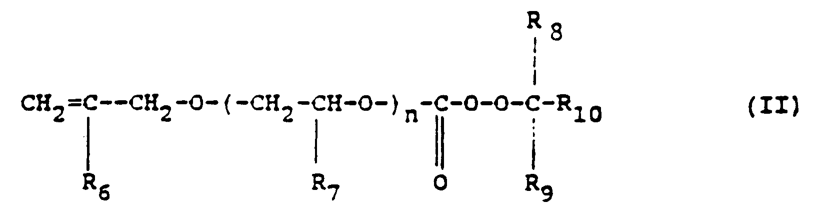 dans laquelle R₆ représente un atome d'hydrogène ou un groupe alkyle en C₁-C₄, R₇ représente un atome d'hydrogène ou un groupe méthyle, R₈ et R₉ représente des groupes alkyle en C₁-C₄, R₁₀ représente un groupe alkyle, phényle ou phényle alkyl-substitué ou un groupe cycloalkyle en C₃-C₁₂ et n est 0, 1 ou 2,
et un agent d'amorçage de la polymérisation radicalaire (D) ayant une température de décomposition de 40 à 90°C pour obtenir une période de demi-réduction de 10 heures dans une quantité telle qu'il représente 0,01 à 5 parties en poids pour 100 parties en poids de la somme desdits monomères vinyliques (B) et dudit peroxyde organique polymérisable par voie radicalaire (C),
chauffer le mélange obtenu à une température inférieure à la température de décomposition dudit agent d'amorçage (D) jusqu'à ce que ledit polymère d'éthylène (A) soit imprégné d'au moins 50 % en poids desdits monomères vinyliques (B), dudit peroxyde organique polymérisable par voie radicalaire (C) et dudit agent d'amorçage de la polymérisation radicalaire (D), et
élever la température de la suspension aqueuse ainsi obtenue pour provoquer la copolymérisation desdits monomères vinyliques (B) et dudit peroxyde organique polymérisable par voie radicalaire (C) dans ledit polymère de l'éthylène (A).

15. Procédé selon la revendication 14, dans lequel ledit polymère d'éthylène est un polymère d'éthylène basse densité ayant une densité de 0,910 à 0,935 g/cm³.

16. Procédé selon la revendication 14, dans lequel ledit polymère d'éthylène est un polymère d'éthylène contenant des groupes époxy obtenus par copolymérisation de l'éthylène et de l'acrylate ou du méthacrylate de glycidyle ou de mélanges de ceux-ci.

17. Procédé selon la revendication 14, dans lequel ledit polymère d'éthylène est obtenu à partir d'éthylène et d'un ester vinylique.

18. Procédé selon la revendication 14, dans lequel ledit polymère d'éthylène est un caoutchouc de copolymère éthylène-propylène.

19. Procédé selon la revendication 14, dans lequel ledit polymère d'éthylène est obtenu à partir d'éthylène et d'un ester acrylique ou méthacrylique ou de mélanges de ceux-ci.

20. Procédé selon la revendication 14, dans lequel ledit polymère d'éthylène est un caoutchouc de copolymères éthylène-propylène-diène.

21. Procédé selon la revendication 14, dans lequel au moins 50 % en poids desdits monomères vinyliques sont constitués de monomères vinyliques aromatiques.

22. Procédé selon la revendication 14, dans lequel au moins 50 % en poids desdits monomères vinyliques sont constitués d'esters acryliques ou méthacryliques monomères ou de mélanges de ceux-ci.

23. Procédé selon la revendication 16, dans lequel ledit copolymère d'éthylène contenant des groupes époxy est obtenu par copolymérisation de 60 à 99,5 % d'éthylène et de 0,5 à 40 % en poids d'acrylate de glycidyle, de méthacrylate de glycidyle ou de mélanges de ceux-ci.

24. Procédé selon la revdendication 17, dans lequel ledit ester vinylique est l'acétate de vinyle.

25. Procédé selon la revendication 17, dans lequel ledit polymère d'éthylène est obtenu à partir de 50 à 99% en poids d'éthylène et de 50 à 1 % en poids d'un ester vinylique.

26. Procédé selon la revendication 19, dans lequel ledit polymère d'éthylène est constitué de 50 à 99 % en poids d'éthylène et de 50 à 1 % en poids d'un ester acrylique ou d'un ester méthacrylique ou de mélanges de ceux-ci.
